# EUROPEAN PATENT APPLICATION

(11) **EP 3 837 937 A1**
(43) Date of publication of application: **23.06.2021**
(21) Application number: 19218206.1
(22) Date of filing: 19.12.2019
(51) Int. Cl.: A01B 49/02

(54) **AN IMPLEMENT FOR SOIL TILLAGE, A COULTER, USE OF A COULTER, A CYLINDER ASSEMBLY, USE OF A CYLINDER ASSEMBLY, A FRAMING FOR AN IMPLEMENT FOR SOIL TILLAGE AND A PROCESS FOR MANUFACTURING AN IMPLEMENT FOR SOIL TILLAGE**

(71) Applicant: Shtyn, Rostyslav, Vancouver, Bristish Columbia V6R 2J5 (CA)
(72) Inventor: Shtyn, Rostyslav, Vancouver, Bristish Columbia V6R 2J5 (CA)
(74) Representative: Kador & Partner PartG mbB

(57) **Abstract**

The invention concerns an implement for soil tillage comprising a supporting structure and a supporting frame. The latter extends from a distal structural member of the supporting structure and comprises at least two support arms, being detachably connected to the distal structural member, and at least one structural part. The latter is detachably connected to at least two of the support arms and situated at a level being lower than a lower surface of the support arms. A plurality of tillage assemblies can be affixed to one or more of the structural members of the supporting structure and/or to one or more of the structural parts and/or to the support arms each. The invention also relates to a coulter, use of such a coulter, a cylinder assembly, use of such a cylinder assembly, a framing for an implement for tillage and a process for manufacturing an implement for tillage.

## Description

The present invention concerns an implement for soil tillage. Moreover, the invention relates to a coulter, use of such a coulter, a cylinder assembly, use of such a cylinder assembly, a framing for an implement for soil tillage and a process for manufacturing an implement for soil tillage.

Soil cultivation plays a decisive role for plant production as this technique is a universal means for influencing many physical, chemical and biological properties of the soil and, finally, of its fertility. The mechanical soil tillage mainly aims at effectively combating and destroying weeds and at creating favourable soil conditions for sowing and soil cultivation. Another major objective of the mechanical soil tillage is to optimise the water and mineral supply of the plants. Currently, methods of cultivation of crop plants based on a minimisation of tillage are increasingly applied. Simultaneously, weed infestation of cultivated plants by perennial weeds, e.g. leafy spurge, blue lettuce and field bindweed, grows, whereas the harvest yields decrease. Additionally, the infestation of fields with hibernating weeds such as lamb's lettuce, Canadian fleabane and mugwort, accelerates so that an early spring tillage or the application of herbicides, respectively, are required.

In modern farming, it is particularly focused on non-turning tillage commonly referred to as "conservation tillage". This term comprises any tillage process that reduces loss of soil and water compared to conventional tillage. For this purpose, at least 30% of the soil surface should be covered with plant residues after cultivation. Generally, conservation tillage is characterised by two basic principles: Firstly, reduction of the usual intensity of tillage concerning type, depth and frequency with the aim of providing a stable, sustainable soil structure by allowing the soil to rest for a comparatively longer period. This serves for the purpose of preventive protection against soil compaction by subsequent driving across the field. And, secondly, leaving plant residuals of the previous and/or catch crop near or on the soil surface, wherein the aim is possibly soil coverage of an intact soil structure throughout the year. The purpose of this measure is preventive protection against erosion and slurry. The terms "conservation tillage" and "reduced tillage", respectively, commonly describe the combination and reduction of work steps, but not a tillage system or a tillage machine, respectively.

In general, tillage machines provided to cope with the aforementioned challenges, particularly to carry out several different operations, are known. In US 2007/0089888 A1 a plow and a method of fabricating such a plow are disclosed. The plow includes an elongated frame with one or more shear assemblies affixed to the frame in a spaced relationship along a length of the frame. Each of the one or more shear assemblies comprises a shearing blade disposed at a distal end of the shear assembly and configured to operate below the surface of the soil to sever the roots of planted vegetation as the plow is pulled through a field. One or more cylinder assemblies are rotatably and detachably affixed to the frame, positioned parallel to the one or more shear assemblies and configured to rotate as the plow is pulled through a field. The one or more cylinder assemblies further comprise a plurality of radially extending cylinder blades configured to mulch the harvest residues and press the severed vegetation into the soil. The cultivation machine described in US 2007/0089888 A1 is a single-pass complex which is advantageous when compared to multi-pass systems. However, there is still scope for improvement. Particularly disadvantageous is that the tillage depth of the system disclosed in US 2007/0089888 A1 is comparatively restricted. Consequently, this single-pass complex only complies with the requirements of a comparatively restricted spectrum of soil preparation methods and is only applicable to a limited range of soil and climatic conditions.

In summary, the predescribed implement is, from the ecological and economical point of view, unsatisfactory.

It is an objective of the present invention to overcome the above-mentioned and other disadvantages of the state of the art and to provide an implement for soil tillage which is versatile, easily adaptable to different field sizes and seedbed widths, applicable in a straightforward and reliable manner and comparatively efficient and cost-effective. The implement should comply with the requirements of a large variety of soil preparation methods as well as of different soil and climatic conditions. Furthermore, the present invention is directed towards a coulter, the use of such a coulter, a cylinder assembly and the use of such a cylinder assembly. The coulter and the cylinder assembly, respectively, should be improvements and/or alternatives compared to the state of the art, particularly allowing for a comparatively efficient soil tillage. The invention is also directed to a framing for an implement for soil tillage being versatile, easily adaptable to different field sizes and seedbed widths, applicable in a straightforward and reliable manner and comparatively cost-efficient. The framing should be usable as a basis for a large variety of soil tillage implements. Another objective of the present invention is a process for manufacturing an implement for soil tillage which should be applicable to a comparatively large variety of soil preparation technologies as well as to a relatively broad range of soil and climate conditions. The process should be versatile, straight-forward, cost-effective, reproducible and easily scalable for industrial production. The main characteristics of the invention are indicated in the claims.

The problem is solved by an implement for soil tillage comprising a supporting structure. The supporting structure comprises at least one structural member. Thereby, at least one first assembly applicable to soil tillage can be or is detachably affixed to one or more of the structural members each by at least one first linking element. In addition, the herein claimed implement for soil tillage comprises a supporting frame extending from a distal structural member of the supporting structure. The supporting frame is detachably connected to the supporting structure by at least one connecting element. Furthermore, it comprises at least two support arms being detachably connected to the distal structural member of the supporting structure and at least one structural part being detachably connectable or connected to at least two of the support arms by at least one fastener. The at least one structural part is situated beneath a lower surface of the at least two support arms. At least one second assembly applicable to soil tillage can be or is detachably affixed to one or more of the structural parts each by at least one second linking element.

Within the scope of the present invention the terms "soil tillage" and "soil cultivation" are used synonymously. The same applies to "conservation tillage", "conservation soil tillage" and "conservation soil cultivation". The terms "width of the planting bed", "width of the seedbed" and "seedbed width", respectively, refer to the distance between two planting rows and two seed rows, respectively.

Generally, the term "assembly" - prefabricated or mountable or mounted on site - refers particularly to a multi-component soil working tool being part of a work unit of the herein described implement, e.g. to a harrow disc assembly as a part of a harrow assembly, but excluding any joining element, linking element, connecting element, fastener, fixing means and locating element etc. Besides, an assembly can also comprise a plurality of assemblies, which is particularly the case for a cylinder assembly, for instance. However, in this case joining element, linking element, connecting element, fastener, fixing means and locating element etc. are also considered as extra components.

According to the present invention the term "distal structural member" means the only structural member, if the supporting structure comprises exactly one structural member. In case the supporting structure comprises two or more structural members the components are designated in the sequence of installation, *i.e.* first structural member, second structural member etc. For instance, if the supporting structure comprises exactly two structural members the terms "second structural member" and "distal structural member" are synonymous.

In general, the supporting structure serves three main purposes: Firstly, the first assemblies can be or are detachably affixed to it. Secondly, the supporting frame to which the second assemblies are releasably affixable or affixed is detachably connectable or connected to it. Thirdly, the herein claimed implement can be connected to a tractor via a linkage between the supporting structure and the tractor. Besides, the supporting structure can be equipped with a plant for introducing material into the soil, *i.e.* seeds and/or a solid and/or a liquid fertiliser. Introduction of one or more fertilisers into the soil can favourably be done simultaneously with the execution of other agricultural works. Thus, the herein claimed implement is suitable for all agricultural works, with the exception of harvesting.

The structural members and parts, respectively, comprising the first and second assemblies each, are favourably arranged one after the other in a sequence complying with the order of their usage within the cycle of agrotechnical tasks. Particularly, due to the fact that the supporting frame comprises at least one structural part being situated beneath the lower surface of the at least two support arms a comparatively deep vertical tillage depth of up to 0.55 meters is possible when making use of the above claimed implement. Moreover, the flexible design and layout of the herein claimed implement, especially of the supporting structure and the supporting frame, favourably provides the opportunity to easily adapt the implement to different field sizes and seedbed widths. The wide range of the vertical tillage depth realisable by the herein disclosed implement as well as its simple adaptability to different field sizes and, particularly, to different seedbed widths are key differences from soil preparation and/or tillage systems according to the state of the art. Beneficially, the implement is applicable to a comparatively large variety of soil preparation technologies, including conservation tillage and conventional tillage, as well as to a relatively broad range of soil and climate conditions, regardless of the field size and width of the planting bed. Moreover, the herein claimed implement is applicable to soil preparation and tillage for the growing of a large spectrum of crop plants including, but not limited to, maize, cereals, olive cultivation, pulse, sunflower, cotton plants, sugar cane and miscellaneous vegetables. Particularly, with respect to crops like sunflower, cotton plants and sugar cane, for instance, use of the above-described implement is highly efficient and cost-effective.

In addition, the herein claimed implement favourably shows a very compact design. Consequently, a comparatively low total weight is realisable. Due to the relatively small total dimensions and the comparatively low total weight of the herein claimed implement a relatively high speed is achievable during soil tillage so that the time needed for soil tillage is reduced. Besides, when using the claimed multifunctional implement comparatively less passes are to be performed, resulting in minimal soil load and, thus, in less unfavourable effects on the soil, particularly in a decreased soil compaction. The soil is prevented from over-compaction and the harvest is increased. By less passes fuel consumption is reduced, whereby carbon dioxide emission is beneficially lowered. Overall, costs for soil preparation for the cultivation of crops are optimised.

It is also possible to manufacture the herein described implement for mountainous regions or small to middle-sized farmlands having only two rows to be cultivated, for instance. Favourably, soil cultivation and, if necessary, simultaneous sowing is possible over a width ranging from 2 metres to 12 metres, particularly from 3 metres to 12 metres. For use of the smaller types of the herein described implement having a working width of up to 3 metres a tractor power of only 150 hp at the maximum is required. Advantageously, for most types of the herein claimed implement no expensive and/or wearing parts, e.g. pneumatic, electrical or hydraulic actuators, are needed, except for those having a working width of 12 metres and whose total width has to be adapted to roadway width, e.g. after usage on a field.

By using the herein claimed implement the soil preparation process for cultivation of future crops is improved. Advantageously, a complex mechanical soil tillage is realised by the application of only one aggregate being capable of performing diverse agrotechnical operations. The modular system of the claimed implement in combination with the quick and easy assembly of the supporting structure, a preassembled supporting frame or the support arms and the structural parts, respectively, the first assemblies and second assemblies allows manufacturing and/or assembling several differently equipped soil tillage implements depending on the applied soil preparation method and/or soil tillage technology and tasks, respectively, the specific field size and the soil and climate conditions. Thus, customising is possible, e.g. with respect to the dimensions of the implement itself, the dimensions of the assemblies and/or of their components themselves, e.g. the width of a longitudinal coulter assembly comprised in a cylinder assembly and its longish coulters, respectively, the lateral distance between vicinal assemblies, selection of the assemblies and choice of the width of the planting bed and of the seedbed, respectively. Advantageously, this makes the herein described implement a reliable alternative both to known multi-step soil tillage systems and to single-step soil cultivation machines.

Advantageously, soil tillage with a herein claimed implement allows complete cutting of weeds and crop residues and formation of a mulch layer on the soil surface. As a result, the soil bearing capacity is significantly enhanced. Furthermore, the demand for chemical pesticides is reduced and favourable conditions for organic matter mineralisation are created. The latter leads to an increase of the nutrient content and the nutrient elements in the soil as well as of their availability for plants, resulting in a reduced need for expensive mineral fertilisers. Additionally, the water retention capacity of the soil is favourably improved by applying a herein described implement. Due to creation of a homogeneous soil structure and of mulch the rainfall dampness is well absorbed by the soil and therefore used more effectively. Moreover, excess dampness resulting from snow melting can be well absorbed and/or collected by the mulched soil. Surface discharge and development of erosion processes are inhibited, being particularly relevant to slopes in broken terrain, and loss of moisture by vaporisation from the upper root layer is diminished or impeded. Overall, a reduction of irrigation costs is achieved as a well-ventilated soil does not only retain dampness better but also needs less water. Plant residues within the surface layer contribute to resistance against wind erosion. Besides, if the soil is saturated with plant remains it becomes more resistant against mechanical impacts. Consequently, soil destruction under the influence of agricultural implements and tracked vehicles is prevented. Furthermore, the soil temperature conditions are optimised as increasing the amount of organic substances within the soil contributes to maintaining a more stable soil temperature. Crops planted after performing soil tillage with the herein claimed implement resist drought comparatively better and/or longer. That allows carrying out field operations relatively early. Therefore, the sun radiation resource is used more comprehensively, for instance.

The herein described implement for soil tillage combines the advantages of miscellaneous soil cultivation methods, namely ploughing, flat cutting and surface working. The multifunctional nature of the herein claimed implement does not only comply with the biological characteristics of the cultigens, but also provides high yields and an economical plant production. It is advantageously suitable for both spring and autumn tillage. Moreover, it works robustly on essentially all soils and under essentially all climate conditions. Good results, *i.e.* good harvests, are even gained on new and/or unprepared farmland and weed-infested soils. Furthermore, due to its simple and straightforward construction it can be manufactured and assembled in a simple and cost-effective process, regardless of the size of production line. Moreover, it can also be modified and reconfigured, even on the field, *e.g.* for another cultivation, in a straightforward manner without specific knowledge and special tools. Almost all of the aforementioned operations can be performed simply with a wrench. Therefore, preparation time and work time, respectively, and costs are favourably comparatively low. Besides, in most of all cases maintenance and repair can also be carried out without consultation of an expert. The claimed implement is characterised by user-friendly operation, very good safety mechanisms, reliability, robustness and very good performance. In addition, the herein claimed implement is in accordance with contemporary requirements of soil tillage, particularly of conservation soil cultivation. Thus, the implement described above is a comparatively versatile, maintenance-friendly, affordable and cost-saving alternative to machines according to the state of the art.

According to another embodiment of the herein described implement at least one construction element is positioned between and releasably connectable or connected to an upper surface of one of the structural parts and to the lower surface (i.) of the at least two support arms or (ii.) of each of the at least two support arms.

In case (i.) one and the same construction element is arranged beneath the lower surface of all support arms. According to alternative (ii.) it is provided that at least one construction element - being mono-component or multi-component - is arranged beneath the lower surface of each of the support arms. A multi-component construction element can comprise several construction elements aligned next to one another, wherein adjacent construction elements can be detachably connected to one another. In any case two or more construction elements can be arranged vertically on top of each other, wherein adjacent construction elements can be releasably connected to one another.

Another embodiment of the claimed implement provides that a plurality of first assemblies is arrangeable or arranged along a longitudinal axis A_{L} of each of the structural members at a predefinable distance D₂ from each other. Alternatively, or as a complement, a plurality of second assemblies is arrangeable or arranged along a longitudinal axis A_{LS} of each of the structural parts, at a predefinable distance D_{S} from each other. The longitudinal axis A_{LS} of at least one of the structural parts is parallel to the longitudinal axis A_{L} of at least one of the structural members. The term "a plurality of second assemblies is arrangeable or arranged along a longitudinal axis A_{LS} of at least one of the structural parts, at a predefinable distance D_{S} from each other" also includes the option of detachably affixing a prefabricated second assembly or a second assembly mountable or mounted on site to one of the structural parts. For instance, such a second assembly can be a roller assembly comprising a plurality of wheel assemblies being arranged in a predefined distance D_{S} from each other. Particularly, such a second assembly is detachably affixed to a first end and to a second end of the respective structural part by at least one second linking element each. Another embodiment provides that such a second assembly is detachably affixed to two of the support arms, particularly to the first ends of the second sections of the support arms.

Advantageously, the first assemblies and the second assemblies, respectively, arranged along the longitudinal axis A_{L} or A_{LS}, respectively, of one and the same structural member or structural part, respectively, are of the same type each. Alternatively, or as a complement, the first assemblies and/or the second assemblies arranged along the longitudinal axis A_{L} or A_{LS}, respectively, of one and the same structural member or structural part, respectively, differ from each other. That means that miscellaneous types of first assemblies and second assemblies, respectively, are arrangeable along the longitudinal axis A_{L} or A_{LS}, respectively, of one and the same structural member or structural part, respectively.

Another embodiment of the herein claimed implement provides that the supporting structure comprises at least the distal structural member and a first structural member. The structural members are arrangeable or arranged in tandem at a predefinable distance D₁ from each other, particularly with a first longitudinal axis A_{L1} of the first structural member and a second longitudinal axis A_{L2} of the distal structural member being parallel to one another. Moreover, the distal structural member and the first structural member are detachably linkable or linked by at least one joining element.

According to another embodiment of the herein claimed implement at least one lateral section is detachably connectable or connected to the supporting structure and/or to the supporting frame each by at least one fixing means each. For instance, a longitudinal axis A_{LL} of at least one of the lateral sections can be identical or parallel with the first longitudinal axis A_{L1}, the second longitudinal axis A_{L2} or the longitudinal axis A_{LS}. Alternatively, or as a complement, the longitudinal axis A_{LL} and at least one axis selected from the group consisting of the first longitudinal axis A_{L1}, the second longitudinal axis A_{L2} and the longitudinal axis A_{LS} can be arranged in an acute angle. Thereby, first assemblies or second assemblies are releasably affixable or affixed to the respective lateral section.

A further embodiment of the above-claimed implement provides that at least one joining element, first linking element, connecting element, fastener, second linking element and/or fixing means is comprised in a force-closed and/or form-closed and/or frictional connection. In another implement at least one joining element, first linking element, connecting element, fastener, second linking element and/or fixing means comprises a clamping joint component, a sliding joint component, a snap fastening, an articulation component, a latching connection component, a coupling component and/or a hitching component. For instance, the at least one joining element, first linking element, connecting element, fastener, second linking element and/or fixing means is selected from group consisting of clamping joints, sliding joints, snap fastenings, articulations, latching connections, couplings and hitchings. According to a further embodiment of the claimed implement the at least one joining element, first linking element, connecting element, fastener, second linking element and/or fixing means comprises or is a block clamp, a hinge, a bayonet joint, a coupling or a hitch. Alternatively, or as a complement, one embodiment of the implement provides at least one device being detachably affixable or affixed to the at least one joining element, first linking element, connecting element, fastener, second linking element and/or fixing means. For instance, the device may comprise or be a clamping joint, *e.g.* a block clamp, an articulation, *e.g.* a hinge, a latching connection, *e.g.* a bayonet joint, a coupling and/or a hitch.

In an alternative embodiment of the herein claimed implement at least one connecting element comprises a two-piece component, wherein a first part of the two-piece component is detachably affixable or affixed to the supporting frame and releasably connectable or connected with a second part of the two-piece component and the second part being releasably affixable or affixed to the distal structural member of the supporting structure.

Advantageously, the first part of the two-piece component is connectable or connected to the supporting frame by a force-closed and/or form-closed and/or frictional connection. Alternatively, or as a complement, the first part of the two-piece component is connectable or connected to the supporting frame by an adhesive, a solder or a welded connection.

According to a further embodiment of the herein described implement at least one first linking element and/or second linking element comprises a two-piece device, wherein a first section of the two-piece device is detachably affixable to (i.) one of the first assemblies or one of the structural members, or (ii.) one of the second assemblies or one of the structural parts, and releasably connectable or connected with a second section of the two-piece device and the second section being releasably affixable or affixed to one of the structural members or to one of the structural parts.

Favourably, the first section of the two-piece device is connectable or connected to one of the first assemblies, one of the structural members, one of the second assemblies or one of the structural parts by a force-closed and/or form-closed and/or frictional connection. Alternatively, or as a complement, the first section of the two-piece device is connectable or connected to one of the first assemblies, one of the structural members, one of the second assemblies or one of the structural parts by an adhesive, a solder or a welded connection.

A further embodiment of the described implement provides that at least two support arms are tiltably mounted on the supporting structure, and are tiltable about a rotation axis A_{R1} being parallel to the second longitudinal axis A_{L2}.

Within the scope of the present invention the term "tiltably mounted" includes "hinge-mounted", "swivel-mounted" and "pivotally mounted".

A tiltable mounting of at least two support arms comprised in the supporting frame and to which at least one structural part is detachably connectable or connected comprising the second assemblies, where appropriate, is beneficial as the at least two support arms and consequently the supporting frame can be folded up when not needed, particularly on the way to the field and back. Moreover, the supporting frame can advantageously be folded up if only the first assemblies detachably affixed to one of the structural members of the supporting structure are to be applied for soil tillage. Alternatively, or as a complement, it is provided that at least two support arms are tiltable about a rotation axis A_{R2} being perpendicular to the second longitudinal axis A_{L2}. In a further embodiment of the described implement at least one element is provided by means of which at least two support arms are tiltably mounted and/or tiltable about the rotation axis A_{R1} being parallel to the second longitudinal axis A_{L2} and/or about the rotation axis A_{R2} being perpendicular to the second longitudinal axis A_{L2}. The element can comprise or simply be an articulation, e.g. a hinge.

In another embodiment of the claimed implement the supporting frame is tiltably mounted on the supporting structure, and is tiltable about the rotation axis A_{R1} being parallel to the second longitudinal axis A_{L2}.

A tiltable mounting of the supporting frame comprising the second assemblies, where appropriate, is beneficial in that the supporting frame can be folded up when not needed, particularly on the way to the field and back. Moreover, the supporting frame can advantageously be folded up if only the first assemblies detachably affixed to one of the structural members of the supporting structure are to be applied for soil tillage. In a further embodiment of the herein described implement at least one element is provided by means of which the supporting frame is tiltable about the rotation axis A_{R1} being parallel to the second longitudinal axis A_{L2}. The element can comprise or simply be an articulation, e.g. a hinge.

Another embodiment of the claimed implement provides that at least two of the support arms comprise a first section and a second section each. Thereby, the first section and the second section are detachably linkable or linked. Alternatively, they can be indissolubly linked, *e.g.* by a solder or welded connection. Moreover, an angle α between an upper surface of the first section and an upper surface of the second section is an obtuse angle. Finally, a first end of the first section is detachably connectable or connected to the distal structural member of the supporting structure. Alternatively, or as a complement, in another embodiment the first end of the first section of each of the at least two support arms is detachably linkable or linked to the distal structural member of the supporting structure by at least one fixing element. According to a further embodiment of the herein described implement the at least one fixing element comprises a clamping joint component, a sliding joint component, an articulation component, a latching connection component, a coupling component and/or a hitching component. In another embodiment of the claimed implement the at least one fixing element is selected from group consisting of clamping joints, sliding joints, articulations, latching connections, couplings and hitchings. In a further embodiment of the herein described implement the at least one fixing element comprises or is a block clamp, a hinge, a bayonet joint, a coupling and/or a hitch. Alternatively, or as a complement, one embodiment of the implement provides at least one device being detachably affixable to the at least one fixing element. The device may comprise or be a clamping joint, e.g. a block clamp, an articulation, *e.g.* a hinge, a latching connection, *e.g.* a bayonet joint, a coupling and/or a hitch. In an alternative embodiment of the claimed implement the obtuse angle α between the upper surface of the first section and the upper surface of the second section ranges from 100 to 170 degrees, favourably from 110 to 160 degrees, particularly from 115 to 165 degrees. According to another embodiment of the herein described implement a longitudinal axis A_{LA} of the second section of each of the support arms is perpendicular to the second longitudinal axis A_{L2} of the distal structural member. This design is comparatively easy to realise.

A further embodiment of the herein described implement provides that at least one of the lateral sections is tiltably mounted on the supporting structure or on the supporting frame. Thereby, at least one of the lateral sections is tiltable about a rotation axis A_{R3} being perpendicular to the second longitudinal axis A_{L2} and/or to the longitudinal axis A_{LS}.

A tiltable mounting of a lateral section is favourable as the lateral section can be folded up when not needed, particularly on the way to the field and back. Moreover, the lateral section can advantageously be folded up if only a part of the assemblies detachably affixed to one of the structural members of the supporting structure and/or to the at least one structural part is to be applied for soil tillage.

In a further embodiment of the described implement at least one element is provided by means of which the at least one lateral section is tiltable about the rotation axis A_{R3} being perpendicular to the second longitudinal axis A_{L2} and/or the longitudinal axis A_{LS}. The element can comprise or simply be an articulation, e.g. a hinge.

In another embodiment of the herein described implement for soil tillage the first assemblies and/or the second assemblies are independently from each other laterally adjustable each, particularly along
- the longitudinal axis A_{L} of one of the structural members,
   particularly the first longitudinal axis A_{L1} of the first structural member and/or
   the second longitudinal axis A_{L2} of the distal structural member, and/or
- the longitudinal axis A_{LS} of one of the structural parts.

This is of advantage as the lateral distance between two assemblies can be adapted individually in a particular case. Favourably, the first assemblies and the second assemblies, respectively, cannot only be precisely arranged, but also rearranged. For instance, this can be done by simply loosening the at least one first linking element or the at least one second linking element, respectively, and moving the first assembly or the second assembly, respectively, along the specific structural member or structural part, respectively. After reaching the desired position the first assembly or the second assembly, respectively, can be detachably affixed to the specific structural member or structural part, respectively, again by the at least one first linking element or the at least one second linking element, respectively.

Alternatively, or as a complement, according to a further embodiment of the herein claimed implement the first assemblies and/or the second assemblies are independently from each other vertically adjustable each, particularly along an axis A_{P1} orientated perpendicular to
- the longitudinal axis A_{L} of one of the structural members, particularly the first longitudinal axis A_{L1} of the first structural member and/or the second longitudinal axis A_{L2} of the distal structural member, and/or
- the longitudinal axis A_{LS} of at least one of the structural parts.

As a result, in a particular case the working depth and tillage depth, respectively, can favourably be adjusted individually for each type of assembly, e.g. for a harrow assembly, as well as for each assembly within one work unit of the herein described implement, e.g. for a harrow disc assembly.

According to another embodiment of the claimed implement at least one joining element, first linking element, connecting element, fastener, second linking element and/or fixing means comprises a vertical adjustment. In one embodiment the vertical adjustment contains at least one perforated plate and at least one locating element. Particularly, one of the perforated plates can be or is affixed, favourably releasably, to the specific vertically adjustable first assembly or second assembly. By simply loosening the at least one locating element the first assembly or the second assembly can be moved vertically until the desired position is reached and detachably affixed by the locating element again in a reliable and safe manner. This is of major benefit as the vertical tillage depth of each of the first assemblies and the second assemblies, respectively, can individually be adjusted and/or controlled in a very simple and cost-effective manner.

A "locating element" can also be a "fastening element" or comprise at least one "fastening means". For instance, a screw, a pin or a bolt, particularly in conjunction with a nut, can be applied as a locating element.

Alternatively, or as a complement, a level at which the at least one structural part is situated is individually adjustable and/or controllable for each of the structural parts. For instance, one or more lengthwise adjustable, e.g. telescopically adjustable, construction elements can be provided. Favourably, the vertical tillage depth of the second assemblies detachably affixable or affixed to a structural part is in the range of 0.05 meters to 0.55 meters, beneficially in the range of 0.05 meters to 0.45 meters, particularly in the range of 0.05 meters to 0.35 meters. Thus, the implement is applicable to both conservation tillage and conventional tillage, wherein the vertical tillage depth is comparatively finely adjustable to the respective type of soil and soil conditions. In case of conventional soil cultivation the working depth and tillage depth, respectively, can actually be configured deeper than that of machines known from the state of the art.

According to another embodiment of the claimed implement at least three of the first assemblies and/or of the second assemblies are arrangeable in a staggered manner, particularly along
- the longitudinal axis A_{L} of one of the structural members, particularly the first longitudinal axis A_{L1} of the first structural member and/or the second longitudinal axis A_{L2} of the distal structural member, and/or
- the longitudinal axis A_{LS} of one of the structural parts.

For instance, the term "in a staggered manner" refers to a chequered pattern or an essentially chequered pattern. An arrangement in a staggered manner can be provided along one and the same structural member or structural part, respectively. Alternatively, or as a complement, an arrangement in a staggered manner is generated by including the first assemblies of the first and the distal structural member or by including the first assemblies of at least one of the structural members and the second assemblies of at least one of the structural parts. An arrangement in a staggered manner is particularly advantageous with respect to the second assemblies, particularly harrow discs, if there are large quantities of plant residues in the soil, e.g. with sunflowers.

In one embodiment of the herein claimed implement the supporting structure and/or the supporting frame comprise a material selected from the group of metals, steels and carbon, and mixtures and alloys thereof. Alternatively, the supporting structure and/or the supporting frame can be made of one of the afore-mentioned materials or of a mixture or an alloy of at least two of them. Particularly, the supporting structure and/or the supporting frame are made of a tube material, favourably of a round tube or a square tube.

In another embodiment of the above-described implement the at least one first assembly and the at least one second assembly are independently from each other selected from the group consisting of cutter assemblies, cylinder assemblies, coulter assemblies, harrow assemblies and roller assemblies.

Within the scope of the present invention the term "harrow assembly" refers to a component of a set of harrow disc assemblies - comprising at least one flat or one concave harrow disc having a smooth or toothed circumferential edge each - and a harrow, respectively. The latter is an implement for breaking up and smoothing out the surface of soil. Contrary, a conventional plough, is used for deeper tillage at depths of about 0.15 m to 0.35 m. Furthermore, the term "harrow assembly" also covers chisel assemblies and assemblies comprised in a buster. For instance, a harrow assembly contains a plurality of harrow disc assemblies which can comprise a first and a second harrow disc, wherein the first harrow disc and the second harrow disc of each harrow disc assembly are mounted mirror-inverted with respect to a vertical axis, wherein the first harrow disc and the second harrow disc of each harrow assembly are arranged in a staggered mode along an axis A_{P2} orientated perpendicular to the second longitudinal axis A_{L2}, and wherein a plurality of first harrow discs and a plurality of second harrow discs are aligned identically each.

The term "harrow disc" is used synonymously to the terms "disc coulter" and "rolling coulter", respectively.

Another embodiment of the herein claimed implement provides that the at least one first assembly is selected from the group consisting of (i.) cutter assemblies, (ii.) cylinder assemblies and (iii.) coulter assemblies, and the at least one second assembly is selected from the group consisting of (i.) harrow assemblies comprising at least one disc coulter, (ii.) chisel assemblies, (iii.) assemblies comprised in a buster and (iv.) roller assemblies.

According to a further embodiment the herein claimed implement comprises at least one left-hand cutter assembly which can be mounted on the left half of one of the structural members, particularly, the first structural member, and at least one right-hand cutter assembly which can be mounted on the right half of the same structural member, particularly the first structural member. Thereby, the at least one right-hand cutter assembly is mirror-inverted in relation to the at least one left-hand cutter assembly.

Another embodiment of the claimed implement provides that each cutter assembly comprises (i) a cutter brace extending downwardly from one of the structural members, particularly from the first structural member, (ii) a length adjustable cutter support extending at an adjustable lateral angle β from a distal portion of the cutter brace, the cutter support being detachably connectable or connected to the cutter brace, and (iii) a cutting blade being releasably attachable or attached to a distal end of the cutter support and comprising a cutting edge portion, wherein the cutting blade and/or the cutting edge portion of the cutting blade are laterally and/or vertically alignable.

The main purpose of each cutter assembly is to separate harvest residues from the root system. When moving along a row of a field a broad soil layer is lifted above the planting bed and the seed bed, respectively, by the cutting blade and/or the cutting edge portion.

In one embodiment of the herein claimed implement a plurality of cutter assemblies is favourably detachably affixed to one of the structural members, particularly the first structural member, of the structural part by at least one first linking element. Another embodiment provides that the cutter braces and/or the cutter supports comprise a material selected from the group consisting of metals, steels and carbon, and mixtures and alloys thereof. Particularly, the cutter braces and the cutter supports are made of a steel, *i.e.* an iron-carbon alloy. In order to diminish and/or avoid wear they are usually made of a high-strength steel. The cutting blades and/or the cutting edge portions are beneficially made of an even stronger, more durable steel.

In another embodiment of the herein claimed implement the adjustable lateral angle β, at which the length adjustable cutter support extends from the distal portion of the cutter brace, ranges from 5°to 45°, advantageously from 10° to 40°, particularly from 15° to 35°. Alternatively, or as a complement, the lateral angle β is individually adjustable for each cutter support. For instance, this is advantageous in case of varying seed bed widths on one and the same field. The cutter support can favourably be shifted laterally by up to 0.45 m. This can simply be done by loosening a first linking element of the respective cutter assembly and moving the whole cutter assembly along the respective structural member to the desired position. Thus, an optimum adjustment of the distance between vicinal cutter assemblies to the respective widths of the planting beds and the seed beds, respectively, can be easily achieved. In addition, the working and tillage depth, respectively, of each cutter assembly is dependent on its penetration depth being configurable in at least five positions. For instance, a setting interval for adjusting the penetration depth is 0.05 metres. Depth adjustment can easily be conducted by loosening one or more locating elements by which the cutter support is detachably connected to the cutter brace. Afterwards the cutter support can be moved vertically until the desired position is reached and reconnected to the cutter brace. The penetration depth adjustment is, amongst others, dependent on individual preferences, the type of soil, the quantity of organic material and weather conditions.

According to another embodiment of the implement at least one cylinder assembly comprising a cylinder body and a plurality of radial coulter assemblies and/or longitudinal coulter assemblies is provided, wherein the cylinder assembly is particularly rotatably and releasably attachable or attached to a first end and a second end of one of the structural members, particularly the distal structural member, by at least one first linking element. Thereby, the cylinder assembly as a whole can favourably be shifted laterally by simply loosening the at least one first linking element and moving the whole cylinder assembly along the longitudinal axis A_{L} of the respective structural member to the desired position.

In one embodiment the cylinder assembly comprises (i) a cylinder body defining a common axis A_{C1} of a plurality of radial coulter assemblies being arranged along the common axis A_{C1} and comprising a fitting wheel each, each fitting wheel having at least one radially outwards extending ring-shaped coulter on an outer circumferential surface, each of the radial coulter assemblies particularly being positioned immediately behind one of the cutter assemblies, and (ii) a plurality of longitudinal coulter assemblies being arranged along the common axis A_{C1} between vicinal radial coulter assemblies, each of the longitudinal coulter assemblies comprising at least two radially outwards extending longish coulters being arranged along a circumference of the cylinder body.

The terms "coulter having a longish shape" and "longish coulter" are synonymous. The same applies to the terms "coulter being ring-shaped" and "ring-shaped coulter". Within the scope of the present invention two or more longish coulters being arranged i. between vicinal radial coulter assemblies and ii. along a circumference of the cylinder body - comparable to a blade wheel - are collectively referred to as "longitudinal coulter assembly".

Favourably, the cylinder assembly is positioned parallel to the plurality of cutter assemblies.

Due to its modular structural design the cylinder assembly can be assembled on site, even on the field, in a straightforward manner without specific knowledge and special tools. Alternatively, a preassembled cylinder assembly can be provided. Advantageously the cylinder assembly is constructed modularly, making it simple to disassemble single components, such as a coulter, *e.g.* for re-sharpening or replacement. Thus, the cylinder assembly is not only easily adaptable to different conditions, but also designed for simple assembling and maintenance.

In a further embodiment of the herein claimed implement the cylinder assembly is releasably attached to the first end and to the second end of the structural member, particularly the distal structural member, by at least one first linking element being part of or releasably attached to at least two cylinder braces, each of the cylinder braces extending downwardly from the structural member. Thereby a first axial end portion and a second axial end portion of the cylinder assembly are rotatably supported by a distal end of at least one cylinder brace each. Advantageously, the first axial end portion and the second axial end portion of the cylinder assembly are rotatably supported by a recess within the distal end of at least one cylinder brace each, wherein the recess and the axial end portion are complementary or essentially complementary to each other.

In this context the term "complementary" means that the recess and the corresponding axial end portion are formed in such a manner that they can be releasably rotatably connected.

The cylinder assembly fulfils three primary functions, namely loosening the soil to a depth of up to 0.30 m, favourably ranging from 0.15 m to 0.30 m, particularly ranging from 0.20 m to 0.25 m, chopping and/or crushing the harvest residues and pressing the crushed crop residues into the soil. More precisely, the cylinder assembly mulchs effectively the harvest remains, performs crumbling and loosening of the soil, supplies the soil with air, spreads the plant remains evenly over the surface of the soil, where organic substances have the greatest impact, mixes the soil with plant residues and generates a homogeneous, uniform soil layer. As a result, the drainage of the soil surface by desiccation and/or evaporation is considerably reduced, the air inflow is enhanced and the soil temperature is increased. Consequently, the decomposition of the not only partly, but favourably entirely mulched crop residues is accelerated and/or intensified. Even though the plant residues are not fully covered with soil and/or the tillage has been performed only at the end of autumn and frost occurs at lower temperatures there will not arise any problem with respect to spring sowing. Advantageously, a winter furrow is dispensable.

The working depth and tillage depth, respectively, of the cylinder assembly is controllable by adjusting the penetration depth of the cylinder assembly, particularly of the coulter assemblies and their coulters, respectively, into the soil.

According to one embodiment of the implement each of the longitudinal coulter assemblies comprises at least one radially outwards extending coulter mount which can be or is releasably equipped with one of the longish coulters. In a further embodiment the coulter mount comprises at least two first elongated apertures and the longish coulter comprises at least two second elongated apertures, each aperture extending radially outwards. Thereby at least two second elongated apertures of the longish coulter can be made or are made to coincide with at least two first elongated apertures of the coulter mount, wherein the longish coulter and the coulter mount are releasably attachable or attached to one another by at least two locating elements. Favourably, the coulter mount and the longish coulter to be releasably attached to the coulter mount have essentially the same width. Alternatively, the coulter mount has a smaller width than the longish coulter.

By such a kind of releasable connection between a coulter mount and a longish coulter it is advantageously possible to individually control and/or adjust the tillage depth of each of the longish coulters in a very simple, reliable and cost-efficient manner. For instance, a setting interval for adjusting the penetration depth is 0.05 m. In fact, the depth adjustment can easily be conducted by loosening the at least two locating elements by means of which the longish coulter is releasably attached to the coulter mount. Afterwards the longish coulter can be moved radially outwards or radially inwards until the desired position is reached and reaffixed to the coulter mount.

Another embodiment of the claimed implement provides that the distal end portion of each of the cylinder braces contains a height-adjustment, wherein
i. the distal end portion comprises a first opening extending downwardly, particularly an elongated slot, and a first lateral boundary surface and a second lateral boundary surface, comprising at least two holes each being arranged vertically one above the other,
ii. at least one cover plate comprises a second opening for supporting one of the axial end portions of the cylinder assembly and at least two apertures, which can be made to coincide with the at least two holes of the at least one lateral boundary surface, and at least two locating elements by means of which the cover plate is detachably connectable or connected to the distal end portion.

In one embodiment the two lateral boundary surfaces comprise two holes each, wherein the holes of the first lateral boundary surface are provided at an upper end of the surface and the holes of the second lateral boundary surface are provided at a lower end of the surface. Thereby, the holes of the first lateral boundary surface are favourably arranged diagonally or essentially diagonally to the holes of the second lateral boundary surface. In this case the height-adjustment comprises two stages and the two locating elements are arranged diagonally to one another. Alternatively, the two lateral boundary surfaces comprise four holes each, wherein two of the holes of the first and second lateral boundary surface each are provided at the upper level of the specific surface and two of the holes of the first and second lateral boundary surface each are provided at the lower level of the specific surface, wherein the holes of the first lateral boundary surface are on a level with the holes of the second lateral boundary surface. According to this embodiment the height-adjustment also comprises two stages, but it is possible to apply four locating elements, wherein two each are arranged at an identical level. Further embodiments provide that the two lateral boundary surfaces comprise six or eight holes each, wherein the holes of the first lateral boundary surface are on a level with the holes of the second lateral boundary surface. Consequently, the height-adjustment comprises four or five stages, wherein it is possible to apply four locating elements, wherein two each are arranged at an identical level. This kind of height-adjustment is advantageous as the vertical tillage depth of the cylinder assembly, particularly the coulter assemblies and their coulters, respectively, can individually be adjusted and/or controlled in a very simple, reliable and cost-effective manner. For instance, a setting interval for adjusting the penetration depth is 0.05 metres. In fact, the depth adjustment can easily be conducted by loosening two or four locating elements by means of which the cover plate is detachably connected to the distal end portion. Afterwards the cylinder assembly can be moved vertically until the desired position is reached and reconnected to the cutter brace.

The number of the provided radial coulter assemblies, the longish coulters comprised in a longitudinal coulter assembly and the longitudinal coulter assemblies comprised in the cylinder assembly of the herein claimed implement depend on several aspects. Two issues to be considered are the climatic conditions and the soil properties.

For instance, if the herein described implement is to be used in a region being characterised by a relatively low level of precipitation and/or on rather dry soil, one favourable embodiment of the implement provides that each of the longitudinal coulter assemblies of the cylinder assembly comprises a relatively large number of longish coulters, or even the maximum number of longish coulters, i.e. typically ten, eleven or twelve longish coulters. However, if heavy rainfalls are characteristic of the region and/or the soil is very moist and rather viscous, a favourable embodiment of the claimed implement provides that each of the longitudinal coulter assemblies of the cylinder assembly comprises four to eight, particularly five, six or seven, longish coulters. As the above-mentioned coulter mounts are releasably attachable to the cylinder body in a straightforward manner the number of longish coulters, each of them releasably affixable to one of the coulter mounts, can be easily altered on site, even on the field.

In one embodiment of the herein described implement it is provided that the cylinder assembly comprises one, two, three or four longitudinal coulter assemblies being arranged between vicinal radial coulter assemblies each. For instance, the cylinder assembly comprises two or three longitudinal coulter assemblies and a first radial coulter assembly at a first axial end portion of the cylinder assembly and a second radial coulter assembly at a second axial end portion of the cylinder assembly. However, for reasons of a relatively high stability it is usually recommendable to arrange two longitudinal coulter assemblies between vicinal radial coulter assemblies at the maximum, particularly in case of a cylinder assembly comprising six or more longitudinal coulter assemblies. For instance, in one embodiment of the herein claimed implement the cylinder assembly comprises ten longitudinal coulter assemblies and five radial coulter assemblies, two of the eight inner longitudinal coulter assemblies being arranged between vicinal radial coulter assemblies each.

Another point to be considered concerning the number of radial coulter assemblies to be provided is the length of the stems left after harvest. In case the stems are left relatively long, one favourable embodiment of the herein claimed implement provides that two longitudinal coulter assemblies are arranged between vicinal radial coulter assemblies of the cylinder assembly at the maximum. Alternatively, or as a complement, a guiding element is arranged in front of at least one of the longitudinal coulter assemblies, favourably a longish guiding element, particularly a guiding element comprising a longish metal sheet, wherein a longitudinal axis of the favourably longish guiding element is perpendicular or essentially perpendicular to the common axis Aci defined by the cylinder body. Particularly, the guiding element extends radially outwards from the horizontal centre of the corresponding longitudinal coulter assembly. By such a guiding element the comparatively long stems are favourably oriented such that they can easily be chopped and/or crushed by the longish coulters of the longitudinal coulter assembly. Then the severed vegetation is pressed into the soil by the longitudinal coulter assembly. Advantageously, stems deviating to the left or right side of the longitudinal coulter assembly are chopped and/or crushed by a vicinal radial coulter. Afterwards, the severed vegetation is pressed into the ground by the respective radial coulter assembly.

If the stems are comparatively short after harvest, one favourable embodiment of the claimed implement provides that at least two longitudinal coulter assemblies are arranged between vicinal radial coulter assemblies of the cylinder assembly. In other words, providing the minimum possible number of radial coulter assemblies is recommended.

In summary, particularly due to the possibility of lateral and depth alignment an optimum arrangement of the cylinder assembly and its coulter assemblies, respectively, can be easily achieved, taking all specific relevant conditions into account, e.g. the applied soil preparation technology, soil and climate conditions, the respective crop plants and seedbed width. Moreover, the flexible design and layout of the claimed implement, especially of the supporting structure and the supporting frame, favourably provides the opportunity to easily adapt the implement to different field sizes and seedbed widths, particularly in conjunction with the structural design of the cylinder assembly and the altered design of the radial coulter assemblies and the longitudinal coulter assemblies. Advantageously, the herein described cylinder assembly permits a straightforward and optimum adjustment of the width of the longitudinal coulter assemblies and the comprised longish coulters respectively, to the specific seedbed width. Consequently, the herein described cylinder assembly is capable of efficiently mulching the harvest residues and pressing the severed vegetation into the soil by its radially extending coulters, regardless of the respective seedbed width and field size.

Another embodiment provides that the cylinder body and/or the fitting wheels comprise a material selected from the group consisting of metals, steels and carbon, and mixtures and alloys thereof. Particularly, the cylinder body and/or the fitting wheels are made of a steel, *i.e.* an iron-carbon alloy. In order to diminish and/or avoid wear they are usually made of a resistant steel. The radially outwards extending ring-shaped coulters and the radially outwards extending longish coulters are beneficially made of an even stronger, more durable steel.

In an alternative embodiment of the herein claimed implement the cylinder assembly comprises at least one radially outwards extending ring-shaped coulter comprising a cutting edge having a serrated shape and/or at least one radially outwards extending longish coulter comprising a cutting edge having a serrated, a triangular, a trapezoid, an arch, a convex or a concave shape.

Such cylinder assemblies are, particularly due to the coulter design, favourably applicable to a comparatively broad spectrum of previous plant cultures, types of soil and other individual demands. One major advantage of such coulter designs is that the provided cutting edge geometries - being altered compared to coulters known from the state of the art - result in a relatively longer cutting edge length. As a consequence thereof, the cutting characteristics and the cutting precision are enhanced compared to coulters known from prior art. Particularly, due to the comparatively long cutting edge length the harvest residues are chopped and/or crushed more efficiently. A major benefit of using coulters of the above-described designs is that the provided cutting edge geometries do not only result in an improved mulching of the harvest residues but also in an enhanced procedure of pressing the severed vegetation into the soil.

Another embodiment of the claimed implement for soil tillage provides that the cylinder assembly comprises a plurality of gauge wheels arranged along the common axis A_{C1} and releasably attachable or attached to the cylinder body between vicinal radial coulter assemblies. By each of the gauge wheels a vertical position of the implement is adjustable and/or controllable during operation, *i.e.* when the implement is pulled through a field. In particular, the gauge wheels are attachable to the cylinder body by a force-closed and/or form-closed and/or frictional connection. Alternatively, or as a complement, an adhesive, a solder or a welded connection can be provided.

According to a further embodiment of the above-described implement it is provided that the cylinder assembly is arranged within an installation housing being fastened to one of the structural members, particularly the distal structural member, of the structural part by at least one first linking element. This design has the major advantages that pulling of the cylinder assembly is facilitated and that the cylinder assembly is kept in balance when pulled forwards. A thrust to the left and right, respectively, is avoided or impeded.

A further embodiment of the implement provides at least one harrow assembly, wherein each harrow assembly and/or each of its harrow disc assemblies, respectively, is particularly releasably attachable or attached to one of the structural parts of the supporting frame. In any case, each harrow disc assembly is positioned behind - if provided - the at least one cutter assembly and the at least one cylinder assembly, favourably at a lateral position between vicinal cutter assemblies.

According to another embodiment of the herein described implement at least one harrow assembly is selected from the group consisting of (i.) a set of harrow disc assemblies comprising at least one flat or one concave harrow disc having a smooth or toothed circumferential edge, (ii.) chisel assemblies, and (iii.) assemblies comprised in a buster.

Flat or concave harrow discs having a smooth or toothed circumferential edge - as applicable according to the present invention - conduct an additional grinding of stubbles from crop residues and the incorporation of chopped and/or crushed organic substances into the soil. Size and type of a harrow disc depend on the selection of the soil preparation technology. According to the invention the harrow discs can be arranged in various sequences and/or manners. Thus, there are many possibilities for configurations. For instance, if there are large quantities of plant residues in the soil, *e.g.* with sunflowers, an arrangement in a staggered manner is particularly advantageous. The term "in a staggered manner" is as defined above, *i.e.* refers to a chequered pattern or an essentially chequered pattern.

In a further embodiment it is provided that a plurality of chisel assemblies is detachably affixable or affixed to a first structural part of the supporting frame and a plurality of assemblies comprised in a buster is detachably affixable or affixed to a second structural part of the supporting frame, wherein the second structural part is positioned behind the first structural part, when viewed from a hitch.

The purpose of a chisel assembly - as applicable according to the present invention - is to eliminate soil compactions by cutting the soil in a depth of up to 0.55 m, advantageously in the range of 30 m to 55 m. The chisel itself loosens the soil and performs crumbling of the field horizon and the subsoil horizon, respectively, without turning the surface soil. Additionally, the chisel tears off the soil from the monolith. Cutting through the interspaces advantageously contributes to a better water absorption of the soil and to a deeper intrusion of water into the soil. Size and type of a chisel itself depend on the choice of the soil preparation technology.

Assemblies comprised in a buster - as applicable according to the present invention - have the function of covering harvest residuals for the winter, while a future planting and seed bed, respectively, is generated. As a consequence, the plant residues can additionally rot and be used as natural biological fertiliser in spring. Size and form of a tine comprised in such an assembly depend on the selection of the soil preparation technology.

Another embodiment of the claimed implement provides at least one roller assembly comprising a cylinder's corpus defining a common axis A_{C2} of a plurality of wheel assemblies. In general, such a roller assembly has major impact on the final quality of soil tillage. It allows levelling and compacting the soil and the additional crumbling of the clods and the smoothing of the field surface. The respective design of the roller assembly depends on the type of the soil and the intended use. In one embodiment of the herein described implement the wheel assemblies comprised in the roller assembly are beneficially connected to the cylinder's corpus by a force-closed and/or form-closed and/or frictional connection. Alternatively, or as a complement, the wheel assemblies comprised in the roller assembly are connectable or connected to the cylinder's corpus by an adhesive, a solder or a welded connection. In another embodiment the wheel assemblies of the roller assembly are individual components or forming a spiral. According to a further embodiment a first end and a second end of the cylinder's corpus of the roller assembly are detachably affixable or affixed to an extension arm each, wherein the extension arms are provided as square tubes, for instance, particularly containing or being made of a metal. Alternatively, at least one of the extension arms can be a tube or a sheet, particularly containing or being made of a metal. Thereby a slotted and/or perforated plate and suitable fixings, *e.g.* screws, pins and/or bolts, particularly in conjunction with a nut, are used for releasably connecting the first end and the second end of the cylinder's corpus, respectively, with one of the extension arms each. A first end of each extension arm is detachably affixable or affixed to a first end of the second section of the corresponding support arm. The simplest way for this affixing is the usage of slotted and/or perforated sheets being provided at the first end of the respective support arm and the first end of the respective extension arm, respectively, and fastening means, *e.g.* screws, pins and/or bolts, particularly in conjunction with a nut.

In a further embodiment of the claimed implement the supporting structure comprises at least one coupling gear being detachably affixable or affixed to the supporting structure, particularly to the first structural member or to the distal structural member if the supporting structure comprises exactly one structural member. Advantageously, the coupling gear comprises or is a perforated plate. Then the implement can simply be connected to various types of tractors by applying at least one safety bolt, for instance. Alternatively, or as a complement, the coupling gear comprises or is a hitch safety bolt or a forked drawbar. In another embodiment the coupling gear comprises or is a ball socket. Favourably, the coupling gear comprising or being a ball socket is compatible with or adaptable to miscellaneous kinds of hitches so that the herein claimed implement can be connected to various types of tractors.

According to another embodiment the herein described implement comprises at least one depth wheel. Advantageously, by providing a depth wheel the load of the supporting structure and/or the supporting frame is reduced. In case of a comparatively large dimensioned depth wheel the overall soil compaction during soil tillage is reduced and the required safety when driving on roads is ensured. Additionally, by usage of a depth wheel soil tillage is also possible under relatively difficult soil conditions, particularly on uneven soil surfaces.

Furthermore, the problem is solved by a coulter
(i.) having a longish shape and comprising
   - a cutting edge having a serrated, a triangular, a trapezoid, an arch, a convex or a concave shape and
   - at least two elongated apertures, each aperture extending between two long sides of the longish coulter, or
(ii.) being ring-shaped and comprising at least two complementary parts, each part comprising a radially outwards extending cutting edge having a serrated shape.

The terms "coulter having a longish shape" and "longish coulter" are synonymous. The same applies to the terms "coulter being ring-shaped" and "ring-shaped coulter".

Coulters of such designs can beneficially be used in an implement for soil tillage, particularly in a cylinder assembly of such an implement. Advantages of such coulter designs are already described hereinbefore. Cylinder assemblies comprising coulters of such designs are favourably applicable to a comparatively broad spectrum of previous plant cultures, types of soil and other individual demands.

It is provided that the longish coulter comprises at least two elongated apertures, each aperture extending between two long sides of the coulter, particularly parallel to two short sides of the coulter. Favourably, the at least two second elongated apertures of the longish coulter can be made to coincide with at least two elongated apertures of a coulter mount provided in a cylinder assembly. Thereby the longish coulter and the coulter mount are releasably attachable to one another by at least two locating elements. Favourably, the coulter mount and the longish coulter to be releasably attached to the coulter mount have essentially the same width. Alternatively, the coulter mount has a smaller width than the longish coulter. By such a kind of releasable connection between a coulter mount and a longish coulter it is advantageously possible to individually control and/or adjust the tillage depth of each of the longish coulters in a very simple, reliable and cost-efficient manner. For instance, a setting interval for adjusting the penetration depth is 0.05 m. In fact, the depth adjustment can easily be conducted by loosening the at least two locating elements by means of which the longish coulter is releasably attached to the coulter mount. Afterwards the longish coulter can be moved radially outwards or radially inwards until the desired position is reached and reaffixed to the coulter mount.

According to one embodiment the at least two complementary parts of the ring-shaped coulter are provided as two halves. This is advantageous as the storage, mounting and replacement is especially simple.

In addition, the problem is solved by the use of (i.) at least one coulter having a longish shape and comprising a cutting edge having a serrated, a triangular, a trapezoid, an arch, a convex, or a concave shape, and at least two elongated apertures, each aperture extending between two long sides of the longish coulter, and (ii.) at least one coulter being ring-shaped and comprising at least two complementary parts, each part comprising a radially outwards extending cutting edge having a serrated shape for manufacturing a cylinder assembly for an implement for soil tillage.

The use of the coulter concerns a process for manufacturing a cylinder assembly for an implement for soil tillage using (i.) at least two coulters having a longish shape, wherein at least one longish coulter comprises a cutting edge having a serrated, a triangular, a trapezoid, an arch, a convex or a concave shape, and at least two elongated apertures, each aperture extending between two long sides of the longish coulter, and (ii.) at least two coulters being ring-shaped, wherein at least one ring-shaped coulter comprises at least two complementary parts, each part comprising a radially outwards extending cutting edge having a serrated shape, comprising the steps of
a) providing a cylinder body defining a common axis A_{C1},
b) providing at least two fitting wheels and the at least two ring-shaped coulters,
c) providing the at least two longish coulters,
d) arranging at least two radial coulter assemblies along the common axis A_{C1}, the radial coulter assemblies comprising one fitting wheel each having at least one ring-shaped coulter on an outer circumferential surface, the ring-shaped coulters extending radially outwards, and
e) arranging at least one longitudinal coulter assembly along the common axis A_{C1} between vicinal radial coulter assemblies, each of the longitudinal coulter assemblies comprising at least two radially outwards extending longish coulters being arranged along a circumference of the cylinder body.

Within the scope of the invention two or more longish coulters being arranged i. between vicinal radial coulter assemblies and ii. Along a circumference of the cylinder body - comparable to a blade wheel - are collectively referred to as "longitudinal coulter assembly".

The cylinder assembly obtained or obtainable by the claimed use and process, respectively, fulfils three primary functions as described hereinbefore and below.

One major advantage of the above-mentioned use of at least one coulter having a longish shape and at least one coulter being ring-shaped for manufacturing a cylinder assembly for an implement for soil tillage and of the process for manufacturing a cylinder assembly for an implement for soil tillage using at least two coulters having a longish shape, wherein at least one longish coulter comprises a cutting edge having a serrated, a triangular, a trapezoid, an arch, a convex or a concave shape and at least two coulters being ring-shaped, wherein at least one ring-shaped coulter comprises a cutting edge having a serrated shape, respectively, is that the provided cutting edge geometries - being altered compared to coulters known from the state of the art - result in a relatively longer cutting edge length. As a consequence thereof, the cutting characteristics and the cutting precision are enhanced compared to coulters known from prior art. Particularly, due to the comparatively long cutting edge length the harvest residues are chopped and/or crushed more efficiently. A major benefit of using coulters having one of the above-described designs for producing a cylinder assembly for soil tillage is that their cutting edge geometries do not only result in an improved mulching of harvest residues but also in an enhanced procedure of pressing severed vegetation into the soil. More precisely, by use of the herein disclosed coulters and the claimed process for manufacturing a cylinder assembly for soil tillage using such coulters, respectively, a cylinder assembly having major advantages over the known cylinder assemblies is obtainable or obtained in a straightforward and comparatively cost-efficient manner. Favourably, by the above-claimed process using the herein described coulters a cylinder assembly is obtainable or obtained which performs the following operations in an improved and relatively efficient manner: mulching harvest remains, crumbling and loosening of the soil, supplying the soil with air, spreading the plant remains evenly over the surface of the soil, where organic substances have the greatest impact, mixing the soil with plant residues and generating a homogeneous, uniform soil layer. As a result, by the herein claimed process a cylinder assembly is provided whose application has the following advantages compared to the usage of cylinder assemblies known from the prior art: the drainage of the soil surface by desiccation and/or evaporation is considerably reduced, the air inflow is enhanced and the soil temperature is increased. Consequently, the decomposition of the not only partly, but favourably entirely mulched crop residues is accelerated and/or intensified. Even though the plant residues are not fully covered with soil and/or the tillage is performed only at the end of autumn and frost occurs at lower temperatures there will not arise any problem with respect to spring sowing. Advantageously, a winter furrow is dispensable.

According to one embodiment of the above-mentioned use and process, respectively, a plurality of radially outwards extending coulter mounts is releasably attached to the cylinder body, wherein one of the longish coulters is releasably affixed to one of the coulter mounts each. Advantageously, at least two coulter mounts are arranged between vicinal radial coulter assemblies. In a further embodiment each of the coulter mounts comprises at least two first elongated apertures, each aperture extending radially outwards. Thereby at least two elongated apertures of a longish coulter can be made to coincide with at least two first elongated apertures of a coulter mount, wherein the longish coulter and the coulter mount are releasably attachable or attached to one another by at least two locating elements. Favourably, the coulter mount and the longish coulter to be releasably attached to the coulter mount have essentially the same width. Alternatively, the coulter mount has a smaller width than the longish coulter.

The number of the provided fitting wheels and the ring-shaped coulters and thus the number of the radial coulter assemblies as well as the number of the longish coulters comprised in a longitudinal coulter assembly and the number of the longitudinal coulter assemblies comprised in the cylinder assembly obtained or obtainable by the herein claimed use and process, respectively, depend on the same several aspects as described hereinbefore and below (for the radial coulter assemblies, the longish coulters comprised in a longitudinal coulter assembly and the longitudinal coulter assemblies comprised in the cylinder assembly of the claimed implement).

In one embodiment the cylinder assembly obtained or obtainable by the herein claimed use and process, respectively, one, two, three or four longitudinal coulter assemblies are arranged as described hereinbefore and below for the implement.

Another point to be considered concerning the number of fitting wheels and ring-shaped coulters and thus radial coulter assemblies is the same as defined for the number of radial coulter assemblies described above and below.

In summary, a cylinder assembly obtainable or obtained according to one embodiment of the herein claimed use and process, respectively, is - particularly due to the coulter design - favourably applicable to a comparatively broad spectrum of previous plant cultures, types of soil and other individual demands. Such a cylinder assembly permits a straightforward and optimum adjustment of the width of the longitudinal coulter assemblies and the comprised longish coulters, respectively, to the specific seedbed width. Consequently, such a cylinder assembly is capable of efficiently mulching the harvest residues and pressing the severed vegetation into the soil by its radially extending coulters, regardless of the respective seedbed width and field size. Due to its modular structural design the cylinder assembly obtainable or obtained according to one embodiment of the herein claimed use and process, respectively, can be assembled on site, even on the field, in a straightforward manner without specific knowledge and special tools. Advantageously, it is simple to disassemble single components, such as a coulter, e.g. for re-sharpening or replacement. Thus, the cylinder assembly is not only easily adaptable to different conditions, but also designed for simple assembling and maintenance.

The problem is also solved by a cylinder assembly being rotatably and detachably affixable to a frame of an implement for soil tillage, comprising
- a cylinder body defining a common axis A_{C1} of a plurality of radial coulter assemblies being arranged along the common axis A_{C1} and comprising a fitting wheel each, each fitting wheel having at least one radially outwards extending ring-shaped coulter on an outer circumferential surface, and
- a plurality of longitudinal coulter assemblies being arranged along the common axis Aci between vicinal radial coulter assemblies, each of the longitudinal coulter assemblies comprising at least two radially outwards extending longish coulters being arranged along a circumference of the cylinder body,
wherein
(i) at least one ring-shaped coulter comprises at least two complementary parts, each part comprising a radially outwards extending cutting edge having a serrated shape, and/or
(ii) at least one longish coulter comprises a cutting edge having a serrated, a triangular, a trapezoid, an arch, a convex or a concave shape and at least two elongated apertures, each aperture extending between two long sides of the longish coulter.

Within the scope of the invention two or more longish coulter being arranged i. between vicinal radial coulter assemblies and ii. along a circumference of the cylinder body - comparable to a blade wheel - are collectively referred to as "longitudinal coulter assembly".

Advantageously, the cylinder assembly is rotatably and detachably affixable to the frame of the implement for soil tillage. The mounting is made in a very straightforward manner without expert knowledge and special tools. Furthermore, due to its simple and straightforward construction it can be manufactured and assembled in a simple and cost-effective process, regardless of the size of production line.

One major advantage of the claimed cylinder assembly is that the cutting edge geometries of the comprised coulters - being altered compared to coulters known from the state of the art - result in a relatively longer cutting edge length. As a consequence thereof, the cutting characteristics and the cutting precision are enhanced compared to coulters known from prior art. Particularly, due to the comparatively long cutting edge length the harvest residues are chopped and/or crushed more efficiently. A major benefit of a cylinder assembly comprising coulters of such designs is that the provided cutting edge geometries do not only result in an improved mulching of harvest residues but also in an enhanced procedure of pressing severed vegetation into the soil.

According to one embodiment of the claimed cylinder assembly a plurality of radially outwards extending coulter mounts is defined as this for the implement hereinbefore and/or below.

Further embodiments of the cylinder embodiments are defined with respect to the implement hereinbefore and/or below.

A further embodiment of the claimed cylinder assembly provides that a plurality of gauge wheels is releasably attached to the cylinder body between vicinal radial coulter assemblies. By each of the gauge wheels a vertical position of the implement comprising a cylinder assembly according to one of the herein described embodiments is adjustable and/or controllable during operation, *i.e.* when the implement is pulled through a field. In particular, the gauge wheels are attachable to the cylinder body by a force-closed and/or form-closed and/or frictional connection. Alternatively, or as a complement, an adhesive, a solder or a welded connection can be provided.

According to a further embodiment of above-described cylinder assembly it is provided that the cylinder assembly is arranged within an installation housing. The latter can be releasably fastened to a frame of an implement for soil tillage. This design has the major advantages that pulling of the cylinder assembly is facilitated and the cylinder assembly is kept in balance when pulled forwards. A thrust to the left and right, respectively, is avoided or impeded.

In summary, a cylinder assembly according to one of the claimed embodiments provides - particularly due to the coulter design - a broad range of functions and applications as describe hereinbefore and below.

In addition, the problem is solved by the use of a cylinder as described hereinbefore.

The afore-mentioned use of a cylinder assembly concerns a process for manufacturing an implement for soil tillage using the cylinder assembly being rotatably and detachably affixable to a frame of the implement for soil tillage and comprising
- a cylinder body defining a common axis A_{C1} of a plurality of radial coulter assemblies, being arranged along the common axis A_{C1} and comprising a fitting wheel each, each fitting wheel having at least one radially outwards extending ring-shaped coulter on an outer circumferential surface, and
- a plurality of longitudinal coulter assemblies being arranged along the common axis Aci between vicinal radial coulter assemblies, each of the longitudinal coulter assemblies comprising at least two radially outwards extending longish coulters being arranged along a circumference of the cylinder body,
wherein
(i.) at least one ring-shaped coulter comprises at least two complementary parts, each part comprising a radially outwards extending cutting edge having a serrated shape, and/or
(ii.) at least one longish coulter comprises a cutting edge having a serrated, a triangular, a trapezoid, an arch, a convex or a concave shape and at least two elongated apertures, each aperture extending between two long sides of the longish coulter.

The process comprises the steps of
a) providing the frame of the implement for soil tillage,
b) providing the cylinder assembly and
c) attaching the cylinder assembly of step b) to the frame of step a) in a detachable manner.

Due to its modular structural design the cylinder assembly can be assembled as described hereinbefore and below.

One advantage of the claimed use of a cylinder assembly being rotatably and detachably affixable to a frame of the implement for soil tillage and of the claimed process for manufacturing an implement for soil tillage using such a cylinder assembly is that the cutting edge geometries of the comprised coulters - being altered compared to coulters known from the state of the art - result in a relatively longer cutting edge length. As a consequence thereof, the cutting characteristics and the cutting precision of the cylinder assembly are enhanced compared to those from known from prior art. Particularly, due to the comparatively long cutting edge length the harvest residues are chopped and/or crushed more efficiently. A major benefit of using such a cylinder assembly for producing an implement for soil tillage is that the provided cutting edge geometries of the contained coulters do not only result in an improved mulching of harvest residues but also in an enhanced procedure of pressing severed vegetation into the soil. More precisely, by the use of the herein described cylinder assembly and the claimed process for manufacturing an implement for soil tillage using such a cylinder assembly, respectively, an implement for soil tillage having major advantages over the implements comprising a known cylinder assembly is obtainable or obtained in a straightforward and comparatively cost-efficient manner. In fact, by the usage of the herein described cylinder assembly and the claimed process for manufacturing an implement for soil tillage using such a cylinder assembly, respectively, an implement is provided which performs the following operations in an improved and relatively efficient manner: mulching harvest remains, crumbling and loosening of the soil, supplying the soil with air, spreading the plant remains evenly over the surface of the soil, where organic substances have the greatest impact, mixing the soil with plant residues and generating a homogeneous, uniform soil layer. As a result, in comparison to the use of implements comprising cylinder assemblies known from the prior art, the drainage of the soil surface by desiccation and/or evaporation is considerably reduced, the air inflow is enhanced and the soil temperature is increased. Consequently, the decomposition of the not only partly, but favourably entirely mulched crop residues is accelerated and/or intensified. Even though the plant residues are not fully covered with soil and/or the tillage is performed only at the end of autumn and frost occurs at lower temperatures there will not arise any problem with respect to spring sowing. Advantageously, a winter furrow is dispensable.

In summary, a cylinder assembly according to one of the claimed embodiments is - particularly due to the coulter design - favourably applicable to a comparatively broad spectrum of previous plant cultures, types of soil and other individual demands. Such a cylinder assembly permits a straightforward and optimum adjustment of the width of the longitudinal coulter assemblies and the comprised longish coulters, respectively, to the specific seedbed width. Consequently, such a cylinder assembly is capable of efficiently mulching the harvest residues and pressing the severed vegetation into the soil by its radially extending coulters, regardless of the respective seedbed width and field size.

Moreover, the problem is solved by a framing for an implement for soil tillage comprising: a supporting structure comprising at least one structural member, and a supporting frame extending from a distal structural member of the supporting structure, being detachably connected to the supporting structure by at least one connecting element, and comprising (i.) at least two support arms being detachably connected to the distal structural member of the supporting structure and (ii.) at least one structural part being detachably connected to at least two of the support arms by at least one fastener and being situated beneath a lower surface of the at least two support arms.

Generally, the supporting structure of the framing serves three main purposes: Firstly, first assemblies, such as cutter assemblies, coulter assemblies and cylinder assemblies, can be detachably affixed to it. Secondly, the supporting frame to which second assemblies, such as, harrow assemblies, chisel assemblies, assemblies comprised in a buster and roller assemblies, are releasably affixable is detachably connected to it. Thirdly, an implement based on the herein claimed framing can be connected to a tractor via a linkage between the supporting structure, particularly a first structural member, and the tractor. Besides, the supporting structure can be equipped with a plant for introducing material into the soil, *i.e.* seeds and/or a solid and/or a liquid fertiliser. Introduction of one or more fertilisers into the soil and execution of other agricultural works can favourably be done simultaneously.

Use of the herein claimed framing for manufacturing an implement for soil tillage results in a machine improving the soil preparation process for cultivation of future crops. Advantageously, a complex mechanical soil tillage is realised by the application of only one aggregate based on the above-described framing and being capable of performing diverse agrotechnical operations.

The modular system of the claimed framing in combination with the quick and easy fitting of the supporting structure, a preassembled supporting frame or the support arms and the structural parts, respectively, and assemblies applicable to soil tillage allows manufacturing and/or assembling several differently equipped soil tillage implements based on the herein claimed framing. The respective design can be chosen depending on the applied soil preparation method and/or soil tillage technology and tasks, respectively, and on the soil and climate conditions as well as on the seedbed width and field size. Thus, customising is possible, e.g. with respect to selection of the dimensions and materials of the supporting structure and its structural members, respectively, and the preassembled supporting frame or the support arms and the structural parts, respectively. This makes the herein described framing advantageous for manufacturing implements being reliable alternatives both to known multi-step soil tillage systems and single-step soil cultivation machines.

In addition, the herein claimed framing favourably shows a very compact design. Consequently, a comparatively low total weight of the framing and an implement for soil tillage based on such a framing, respectively, is realised. Due to the relatively small total dimensions and the comparatively low total weight of an implement based on the herein claimed framing a relatively high speed is achievable during soil tillage so that the time needed for soil tillage is reduced. Besides, when using a multifunctional implement based on the above described framing comparatively less passes are to be performed, resulting in minimal soil load and thus less unfavourable effects on the soil, particularly in a decreased soil compaction. The soil is prevented from over-compaction and the harvest is increased. By less passes fuel consumption is reduced, whereby carbon dioxide emission is beneficially lowered. Overall, the costs for soil preparation for the cultivation of future crops are optimised.

It is also possible to manufacture the herein described framing for mountainous regions or small to middle-sized farmlands having only two rows to be cultivated. Favourably, when using an implement for soil tillage based on the herein claimed framing soil cultivation and, if necessary, simultaneous sowing is possible over a width ranging from 2 m to 12 m, particularly from 3 m to 12 m. For use of the smaller types of an implement for soil tillage based on the herein described framing and having a working width of up to 3 m a tractor power of only 150 hp at the maximum is required. Advantageously, for most types of implements for soil tillage based on the herein claimed framing no expensive and/or wearing parts, e.g. pneumatic, electrical or hydraulic actuators, are needed, except for those having a working width of 12 m and whose total width has to be adapted to roadway width, e.g. after usage on a field.

Particularly, due to the fact that the supporting frame of the herein claimed framing comprises at least one structural part being situated beneath the lower surface of the at least two support arms a comparatively deep vertical tillage depth of up to 0.55 m is possible when the above claimed framing serves as a basis for an implement for soil tillage. Moreover, the flexible design and layout of the herein claimed framing, especially of the supporting structure and the supporting frame, favourably provides the opportunity to easily adapt the framing to different field sizes and seedbed widths. The wide range of the vertical tillage depth by an implement based on the herein disclosed framing as well as its simple adaptability to different field sizes and, particularly, to different seedbed widths are key differences from soil preparation and/or tillage systems according to the state of the art. Beneficially, this type of framing and implement, respectively, is applicable to a comparatively large variety of soil preparation technologies, including conservation tillage and conventional tillage, as well as to a relatively broad range of soil and climate conditions, regardless of the field size and width of the planting bed. Moreover, the herein claimed framing and implements based thereon, respectively, are applicable to soil preparation and tillage for the growing of a large spectrum of crop plants including, but not limited to, maize, cereals, olive cultivation, pulse, sunflower, cotton plants, sugar cane and miscellaneous vegetables. Particularly, with respect to crops like sunflower, cotton plants and sugar cane, for instance, use of the above-described framing is highly efficient and cost-effective.

In one embodiment of the claimed framing for an implement for soil tillage the supporting structure comprises at least the distal structural member and a first structural member, which are arrangeable in tandem at a predefinable distance D₁ from each other, with a first longitudinal axis A_{L1} of the first structural member and a second longitudinal axis A_{L2} of the distal structural member being parallel to one another, and detachably linkable by at least one joining element.

Furthermore, the problem is solved by a process for manufacturing an implement for soil tillage comprising the steps of
a) providing a supporting structure comprising at least one structural member, wherein at least one first assembly applicable to soil tillage can be detachably affixed to one or more of the structural members each by at least one first linking element,
b) providing a supporting frame comprising (i.) at least two support arms being detachably connected to a distal structural member of the supporting structure, and (ii.) at least one structural part being detachably connected to least two of the support arms by at least one fastener, the at least one structural part being situated beneath a lower surface of the at least two support arms and to which at least one second assembly applicable to soil tillage can be detachably affixed by at least one second linking element,
c) connecting the supporting frame to the supporting structure by at least one connecting element in a detachable manner, the supporting frame extending from the distal structural member of the supporting structure,
d) affixing at least one first assembly to one or more of the structural members of the supporting structure each and/or at least one second assembly to one or more of the structural parts of the supporting frame each.

The results and advantages resulting from the claimed implement are equally applicable for the claimed process.

In summary, the above claimed process for manufacturing an implement for soil tillage is versatile, straight-forward, cost-efficient, reproducible and easily scalable for industrial production.

In one embodiment of the claimed process the structural parts and members are configured as defined for the implement hereinbefore. This is one key difference from soil preparation and/or tillage systems according to the state of the art. Another key difference is the wide range of the vertical tillage depth realisable by an implement obtainable or obtained by the above described process, making such an implement applicable to a comparatively large variety of soil preparation technologies. Thereby conservation tillage and conventional tillage are included. Such an implement is also usable for a relatively broad range of soil and climate conditions. An implement obtainable or obtained by the herein claimed process is applicable to soil preparation and tillage for the growing of a large spectrum of crop plants including, but not limited to, maize, cereals, olive cultivation, pulse, sunflower, cotton plants, sugar cane and miscellaneous vegetables, regardless of the field size and width of the planting bed. Particularly, with respect to crop like sunflower, cotton plants and sugar cane, for instance, use of such an implement is highly efficient and cost-effective.

The details of the embodiments given in relation to the implement are equally applicable for carrying out the process. For example, in one embodiment of the herein described process at least one construction element is positioned as defined hereinbefore for the implement. In an alternative embodiment the level at which the at least one structural part is situated is individually adjustable and/or controllable for each of the structural parts. For instance, one or more lengthwise adjustable, e.g. telescopically adjustable, construction elements can be provided.

Another embodiment of the herein claimed process provides that a plurality of first assemblies is arranged along a longitudinal axis A_{L} of at least one of the structural members, at a predefinable distance D₂ from each other. Alternatively, or as a complement, a plurality of second assemblies is arranged along a longitudinal axis A_{LS} of at least one of the structural parts, at a predefinable distance D_{S} from each other. The longitudinal axis A_{LS} of at least one of the structural parts is parallel to the longitudinal axis A_{L} of at least one of the structural members. The term "a plurality of second assemblies arranged along a longitudinal axis A_{LS} of at least one of the structural parts, at a predefinable distance D_{S} from each other" also includes the option of detachably affixing a prefabricated second assembly or a second assembly mountable or mounted on site to one of the structural parts. For instance, such a second assembly can be a roller assembly comprising a plurality of wheel assemblies being arranged in a predefined distance D_{S} from each other. Particularly, such a second assembly is detachably affixed to a first end and to a second end of the respective structural part by at least one second linking element each. Another embodiment provides that such a second assembly is detachably affixed to two of the support arms, particularly to the first ends of the second sections of the support arms.

Another embodiment of the herein claimed process provides that the supporting structure comprises at least the distal structural member and a first structural member. The structural members are arranged in tandem at a predefinable distance D₁ from each other, particularly with a first longitudinal axis A_{L1} of the first structural member and a second longitudinal axis A_{L2} of the distal structural member being parallel to one another. Moreover, the distal structural member and the first structural member are detachably linked by at least one joining element.

Further embodiments of the claimed implement are equally applicable for the claimed process.

In another embodiment of the above-described process the at least one first assembly and the at least one second assembly are independently from each other selected from the group consisting of cutter assemblies, cylinder assemblies, coulter assemblies, harrow assemblies and roller assemblies.

Another embodiment of the herein claimed process provides that the at least one first assembly is selected from the group consisting of (i) cutter assemblies, (ii) cylinder assemblies and (iii) coulter assemblies,
and the at least one second assembly is selected from the group consisting of (i) harrow assemblies comprising at least one disc coulter, (ii) chisel assemblies, (iii) assemblies comprised in a buster and (iv) roller assemblies.

Embodiments for the various assemblies are defined hereinbefore.

In a further embodiment the cylinder assembly comprises (i) a cylinder body defining a common axis A_{C1} of a plurality of radial coulter assemblies being arranged along the common axis A_{C1} and comprising a fitting wheel each, each fitting wheel having at least one radially outwards extending ring-shaped coulter on an outer circumferential surface, each of the radial coulter assemblies particularly being positioned immediately behind one of the cutter assemblies, and (ii) a plurality of longitudinal coulter assemblies being arranged along the common axis A_{C1} between vicinal radial coulter assemblies, each of the longitudinal coulter assemblies comprising at least two radially outwards extending longish coulters being arranged along a circumference of the cylinder body.

The invention is now explained in more detail by the following figures and examples which are considered illustrative. The examples are restricting neither the invention's nor the claims' scope.

The figures show:
- **Fig. 1**: a diagonal view of an implement for soil tillage, view from behind,
- **Fig. 2**: a top view of the implement for soil tillage according to Fig. 1,
- **Fig. 3**: a diagonal view of the implement for soil tillage according to Fig. 1, view from the front,
- **Fig. 4**: a cutter assembly comprised in the implement for soil tillage according to Fig. 1,
- **Fig. 5**: a cylinder assembly before mounting ring-shaped and longish coulters (top); the fully assembled cylinder assembly comprised in the implement for soil tillage according to Fig. 1 (bottom),
- **Fig. 6**: a chisel assembly being affixable to a structural part of a supporting frame,
- **Fig. 7**: an assembly comprised in a buster and being affixable to a structural part of a supporting frame,
- **Fig. 8**: a side view of a supporting frame comprising a harrow assembly and a roller assembly,
- **Fig. 9**: a supporting structure comprised in the implement for soil tillage according to Fig. 1,
- **Fig. 10**: a supporting frame suitable for a herein described implement for soil tillage, and
- **Fig. 11**: a support arm comprised in the supporting frame according to Fig. 10.

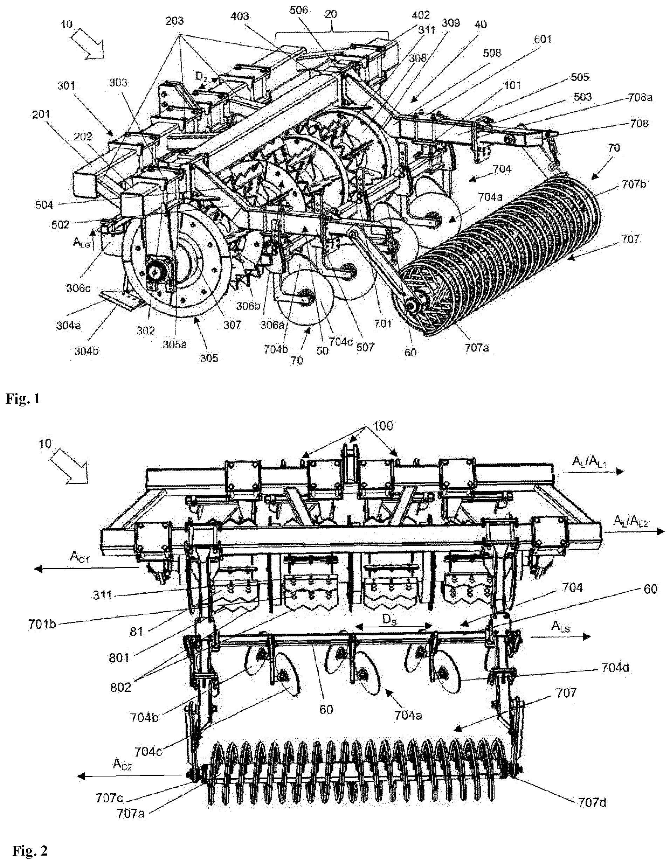

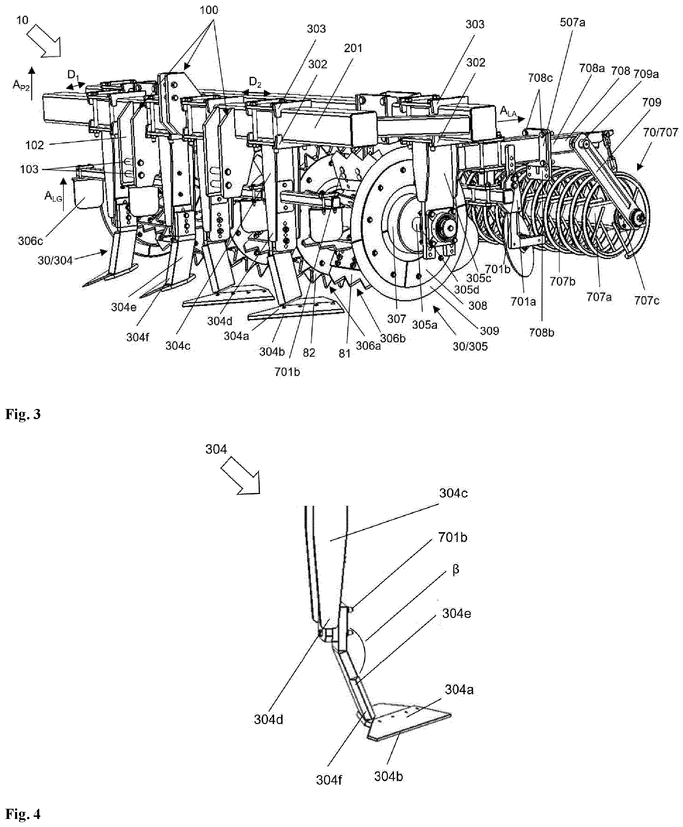

In **Fig. 1** to **Fig. 3** an embodiment of the herein claimed implement 10 for soil tillage is shown from different perspectives, namely a diagonal view from behind in **Fig. 1****,** a top view in **Fig. 2** and a diagonal view from the front in **Fig. 3****.** The implement 10 comprises a supporting structure 20 and a supporting frame 40. The supporting structure 20 comprises a first structural member 201 and a distal structural member 202 which are arranged in tandem at a predefined distance D₁ from each other. Thereby a first longitudinal axis A_{L1} of the first structural member 201 and a second longitudinal axis A_{L2} of the distal structural member 202 are parallel to one another. The first structural member 201 and the distal structural member 202 are linked by four joining elements 203. The linkage can be a detachable one. Alternatively, the supporting structure 20 can comprise only the first structural member 201 or - in addition to the first structural member 201 and the distal structural member 202 - another structural member (not shown), *e.g.* between the first structural member 201 and the distal structural member 202. According to **Fig. 1** to **Fig. 3** first assemblies 30 applicable to soil tillage are detachably affixed to the first structural member 201 along the first longitudinal axis A_{L1} at a predefined distance D₂, *i.e.* cutter assemblies 304, and to the distal structural member 202 along the second longitudinal axis A_{L2}, *i.e.* a cylinder assembly 305 comprising radial coulter assemblies 306a and longitudinal coulter assemblies 306b. Second assemblies 70 applicable to soil tillage, namely a harrow assembly 704 and a roller assembly 707, are releasably attached to the supporting frame 40. Harrow disc assemblies 704a comprised in the harrow assembly 704 shown in **Fig. 1** to **Fig. 3** are arranged along a longitudinal axis A_{LS} of a structural part 60 at a predefined distance D_{S} from each other. The longitudinal axis A_{LS} of the sole structural part 60 is parallel to the first longitudinal axis A_{L1} and to the second longitudinal axis A_{L2}.

The implement 10 according to the embodiment presented in **Fig. 1** to **Fig. 3** comprises two left-hand cutter assemblies 304 being mounted on the left half of the first structural member 201 and two right-hand cutter assemblies 304 being mounted on the right half of the first structural member 201. Thereby, the right-hand cutter assemblies 304 are mirror-inverted in relation to the left-hand cutter assemblies 304.

The cutter assemblies 304 are affixed to the first structural member 201 by a first linking element 301 each, whereas the cylinder assembly 305 is affixed to the distal structural member 202 by two first linking elements 301 in total. The first linking element 301 is a clamping joint, namely a block clamp being a two-piece device. A first section 302 of the two-piece device 301 is particularly detachably affixed to each of the cutter assemblies 304 and to cylinder braces 305c extending downwardly from the distal structural member 202, respectively, and releasably affixed to a second section 303 of the two-piece device 301. Thereby a first axial end portion 305a and a second axial end portion 305b of the cylinder assembly 305 are rotatably supported by a distal end 305d of at least one cylinder brace each 305c. Advantageously, the first axial end portion 305a and the second axial end portion 305b of the cylinder assembly 305 are rotatably supported by a recess (not shown) within a distal end 305d of at least one cylinder brace 305c each, wherein the recess and the axial end portion 305a or 305b are complementary or essentially complementary to each other. The second section 303 of the respective two-piece device is releasably affixed to the first structural member 201 each. Favourably, the first section 302 of the two-piece device 301 is connected to the respective cutter assembly 304 and to the cylinder brace 305c, respectively, by a force-closed and/or form-closed and/or frictionally connection. Alternatively, or as a complement, the first section 302 of the two-piece device 301 can be connected to the respective cutter assembly 304 and the two cylinder braces 305c of the cylinder assembly 305, respectively, by an adhesive, a solder or a welded connection. Instead of being a clamping joint the first linking element 301 can comprise a clamping joint, a sliding joint component, a snap fastening, an articulation component, a latching connection component, a coupling component and/or a hitching component. For instance, the first linking element 301 is selected from group consisting of sliding joints, snap fastenings, articulations, latching connections, couplings and hitchings. The first linking element 301 can also comprise a block clamp or comprise or be a hinge, a bayonet joint, a coupling or a hitch. Alternatively, or as a complement, it can be provided that at least one device (not shown) is detachably affixable to the first linking element 301. The device may comprise or be a clamping joint, *e.g.* a block clamp, an articulation, *e.g.* a hinge, a latching connection, *e.g.* a bayonet joint, a coupling and/or a hitch.

The main purpose of each cutter assembly 304 comprised in the implement 10 for soil tillage according to **Fig. 1** to **Fig. 3** and presented in **Fig. 4** is to separate harvest residues from the root system. When moving along a row of a field a broad soil layer is lifted above the planting bed and the seed bed, respectively, by a cutting blade 304a and/or a cutting edge portion 304b.

The cutter assembly 304 shown in **Fig. 4** comprises a cutter brace 304c extending downwardly from the first structural member 201 and a length adjustable cutter support 304e extending at an adjustable lateral angle □ from a distal portion 304d of the cutter brace 304c. The cutter support 304e is detachably connected to the cutter brace 304c. The cutting blade 304a is releasably attached to a distal end 304f of the cutter support 304e and comprises the cutting edge portion 304b. Advantageously, the cutting blade 304a and/or the cutting edge portion 304b of the cutting blade 304a is laterally and/or vertically alignable. The cutter brace 304c and/or the cutter support 304e can comprise a material selected from the group consisting of metals, steels and carbon, and mixtures and alloys thereof. Particularly, the cutter brace 304c and the cutter support 304e are made of a steel, *i.e.* an iron-carbon alloy. In order to diminish and/or avoid wear they are usually made of a high-strength steel. The cutting blade 304a and/or the cutting edge portion 304b are beneficially made of an even stronger, more durable steel. The whole cutter assembly 304 can favourably be shifted laterally. This can simply be done by loosening a first linking element 301 of the respective cutter assembly 304 and moving the whole cutter assembly 304 along the first structural member 201 to the desired position. Thus, an optimum adjustment of the distance between vicinal cutter assemblies 304 to the respective widths of the planting beds and the seed beds, respectively, can be easily achieved. In addition, the working and tillage depth, respectively, of each cutter assembly 304 is dependent on its penetration depth being configurable in at least five positions. Depth adjustment can easily be conducted by loosening one or more locating elements 701b by which the cutter support 304e is detachably connected to the cutter brace 304c. The locating element 701b can also be a fastening element or comprise at least one fastening means 708c. For instance, a screw, a pin or a bolt, particularly in conjunction with a nut, can be applied as a locating element 701b. Afterwards the cutter support 304e can be moved vertically until the desired position is reached and reconnected to the cutter brace 304c. For instance, a setting interval for adjusting the penetration depth is 0.05 metres. The penetration depth adjustment is, amongst others, dependent on individual preferences, the type of soil, the quantity of organic material and weather conditions.

Favourably the lateral angle β, at which the length adjustable cutter support 304e extends from the distal portion 304d of the cutter brace 304c, ranges from 5 degrees to 45 degrees, advantageously from 10 degrees to 40 degrees, particularly from 15 degrees to 35 degrees. Alternatively, or as a complement, the lateral angle β is individually adjustable for each cutter support 304e. This allows for an even more precise adjustment of the cutter assembly.

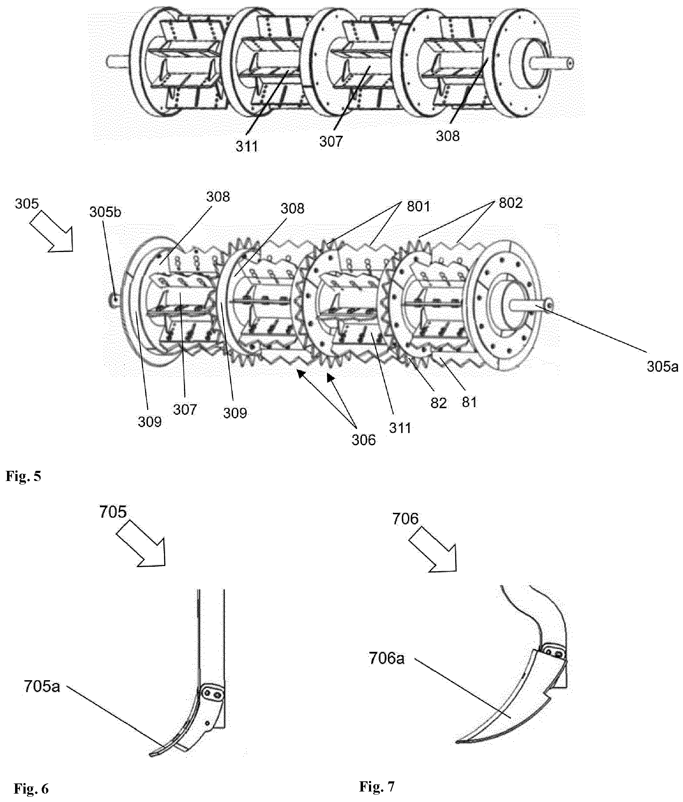

In **Fig. 5** a cylinder assembly 305 before mounting ring-shaped 82 and longish coulters 81 (top) and a fully assembled cylinder assembly 305 comprised in the implement 10 for soil tillage according to **Fig. 1** (bottom) are shown. The cylinder assembly 305 fulfils three primary functions, namely loosening the soil to a depth of up to 0.30 metres, favourably ranging from 0.15 metres to 0.30 metres, particularly ranging from 0.20 metres to 0.25 metres, chopping and/or crushing the harvest residues and pressing the crushed crop residues into the soil. The working depth and tillage depth, respectively, of the cylinder assembly 305 is controllable by adjusting the penetration depth of the cylinder assembly 305, particularly of the radial coulter assemblies 306a and the longitudinal coulter assemblies 306b and their coulters 81, 82, respectively, into the soil. Advantageously, a plurality of radially outwards extending coulter mounts 311 is, particularly releasably, attached to the cylinder body 307, wherein one of the longish coulters 81 is releasably affixed to one of the coulter mounts 311 each. The depth adjustment can easily be conducted by loosening the locating elements 701b by means of which the longish coulter 81 is releasably attached to the coulter mount 311. Afterwards the longish coulter 81 can be moved radially outwards or radially inwards until the desired position is reached and reaffixed to the coulter mount 311. For instance, a setting interval for adjusting the penetration depth is 0.05 metres. By such a kind of releasable connection between a coulter mount 311 and a longish coulter 81 it is possible to individually control and/or adjust the tillage depth of each of the longish coulters 81 in a very simple, reliable and cost-efficient manner.

More precisely, the cylinder assembly 305 mulchs effectively the harvest remains, performs crumbling and loosening of the soil, supplies the soil with air, spreads the plant remains evenly over the surface of the soil, where organic substances have the greatest impact, mixes the soil with plant residues and generates a homogeneous, uniform soil layer. As a result, the drainage of the soil surface by desiccation and/or evaporation is considerably reduced, the air inflow is enhanced and the soil temperature is increased. Consequently, the decomposition of the not only partly, but favourably entirely mulched crop residues is accelerated and/or intensified. Even though the plant residues are not fully covered with soil and/or the tillage has been performed only at the end of autumn and frost occurs at lower temperatures there will not arise any problem with respect to spring sowing. Advantageously, a winter furrow is dispensable.

The cylinder assembly 305 contained in the presented embodiment of the implement 10 comprises a cylinder body 307 defining a common axis A_{C1} of a plurality of radial coulter assemblies 306a. The latter are arranged along the common axis A_{C1} and comprise a fitting wheel 308 each, each of which having one radially outwards extending ring-shaped coulter 82 on an outer circumferential surface 309. Each of the radial coulter assemblies 306a is positioned immediately behind one of the cutter assemblies 304. In addition, a plurality of longitudinal coulter assemblies 306b are arranged along the common axis A_{C1} between vicinal radial coulter assemblies 306a and attached to the cylinder body 307. Each of the longitudinal coulter assemblies 306b comprises several radially outwards extending longish coulters 81 attached to the cylinder body 307. The three inner ring-shaped coulters 82 and all of the longish coulters 81 comprise a plurality of teeth 802 extending radially outwards, *i.e.* have a serrated shape. Such a cylinder assembly 305 is, particularly due to the coulter design, favourably applicable to a comparatively broad spectrum of previous plant cultures, types of soil and other individual demands. One major advantage of the coulters 81, 82 is that the provided cutting edge 801 geometries - being altered compared to coulters known from the state of the art - result in a relatively longer cutting edge 801 length. As a consequence thereof, the cutting characteristics and the cutting precision are enhanced compared to coulters known from prior art. Particularly, due to the comparatively long cutting edge 801 length the harvest residues are chopped and/or crushed more efficiently. A major benefit of using the coulters 81, 82 is that the provided cutting edge 801 geometries do not only result in an improved mulching of the harvest residues but also in an enhanced procedure of pressing the severed vegetation into the soil.

Due to its modular structural design the cylinder assembly 305 can be assembled on site, even on the field, in a straightforward manner without specific knowledge and special tools. Alternatively, a preassembled cylinder assembly 305 can be provided. Advantageously, the herein cylinder assembly 305 is constructed modularly, making it simple to disassemble single components, such as a coulter 81, 82, *e.g.* for re-sharpening or replacement. Thus, the cylinder assembly 305 is not only easily adaptable to different conditions, but also designed for simple assembling and maintenance.

The cylinder body 307 and/or the fitting wheels 308 comprise a material selected from the group consisting of metals, steels and carbon, and mixtures and alloys thereof. Particularly, the cylinder body 307 and/or the fitting wheels 308 are made of a steel, *i.e.* an iron-carbon alloy. In order to diminish and/or avoid wear they are usually made of a resistant steel. The ring-shaped coulters 82 and the longish coulters 81 are beneficially made of an even stronger, more durable steel. The cylinder assembly 305 can also comprise a plurality of gauge wheels (not shown) arranged along the common axis A_{C1} and releasably attached to the cylinder body 307 between vicinal radial coulter assemblies 306a. By each of the gauge wheels a vertical position of the implement 10 is adjustable and/or controllable during operation, *i.e.* when the implement 10 is pulled through a field. In particular, the gauge wheels are attachable to the cylinder body 307 by a force-closed and/or form-closed and/or frictional connection. Alternatively, or as a complement, an adhesive, a solder or a welded connection can be provided. It can also be provided that the cylinder assembly 305 is arranged within an installation housing (not shown) being fastened to one of the structural members 201, 202, particularly the distal structural member 202, by at least one first linking element 301. This design has the major advantages that pulling of the cylinder assembly 305 is facilitated and that the cylinder assembly 305 is kept in balance when pulled forwards. A thrust to the left and right, respectively, is avoided or impeded.

The number of the provided fitting wheels 308 and the ring-shaped coulters 82 and thus the number of the radial coulter assemblies 306a as well as the number of the longish coulters 81 comprised in one of the longitudinal coulter assemblies 306b and the number of the longitudinal coulter assemblies 306b comprised in the cylinder assembly 305 depend on several aspects. Two important issues to be considered are the climatic conditions and the soil properties. For instance, if the cylinder assembly 305 is to be used in a region being characterised by a relatively low level of precipitation and/or on rather dry soil, a relatively large number, or even the maximum number of longish coulters 81, i.e. typically ten, eleven or twelve longish coulters 81, is favourably comprised in each of the longitudinal coulter assemblies 306b. However, if heavy rainfalls are characteristic of the region and/or the soil is very moist and rather viscous, advantageously four to eight, particularly five, six or seven, longish coulters 81 are comprised in each of the longitudinal coulter assemblies 306b. As the above-mentioned coulter mounts 311 are particularly releasably attachable to the cylinder body 307 in a straightforward manner the number of longish coulters 81, which are releasably affixable to one of the coulter mounts 311 each, can be easily altered on site, even on the field. In another embodiment of the cylinder assembly 305 two, three or four longitudinal coulter assemblies 306b are arranged between vicinal radial coulter assemblies 306a each. For instance, the cylinder assembly 305 comprises two or three longitudinal coulter assemblies 306b and a first radial coulter assembly 306a at a first axial end portion 305a of the cylinder assembly 305 and a second radial coulter assembly 306a at a second axial end portion 305b of the cylinder assembly 305. However, for reasons of a relatively high stability it is usually recommendable to arrange two longitudinal coulter assemblies 306b between vicinal radial coulter assemblies 306a at the maximum, particularly in case of a cylinder assembly 305 comprising six or more longitudinal coulter assemblies 306b. Another point to be considered concerning the number of fitting wheels 308 and ring-shaped coulters 82 and thus radial coulter assemblies 306a to be provided, is the length of the stems left after harvest. In case the stems are left relatively long, favourably two longitudinal coulter assemblies 306b are arranged between vicinal radial coulter assemblies 306a at the maximum. Alternatively, or as a complement, a guiding element 306c is arranged in front of at least one of the longitudinal coulter assemblies 306b, favourably a longish guiding element, particularly a guiding element 306c comprising a longish metal sheet, wherein a longitudinal axis A_{LG} of the favourably longish guiding element 306c is perpendicular or essentially perpendicular to the common axis A_{C1} defined by the cylinder body 307. Particularly, the guiding element 306c extends radially outwards from the horizontal centre of the corresponding longitudinal coulter assembly 306b. By such a guiding element 306c the comparatively long stems are favourably oriented such that they can easily be chopped and/or crushed by the longish coulters 81 of the longitudinal coulter assembly 306b. Then the severed vegetation is pressed into the soil by the longitudinal coulter assembly 306b. Advantageously, stems deviating to the left or right side of the longitudinal coulter assembly 306b are chopped and/or crushed by a vicinal radial coulter 306a. Afterwards, the severed vegetation is pressed into the ground by the respective radial coulter assembly 306a. If the stems are comparatively short after harvest, advantageously at least two longitudinal coulter assemblies 306b are arranged between vicinal radial coulter assemblies 306a. In other words, providing the minimum possible number of radial coulter assemblies 306a is recommended in this case.

According to the embodiment of the implement 10 shown in **Fig. 1** to **Fig. 3** the harrow disc assemblies 704a comprised in the harrow assembly 704 are particularly detachably affixed to the sole structural part 60 of the supporting frame 40 by a second linking element 701 each. The structural part 60 is detachably connected to two support arms 50 by two fasteners 601 each and situated beneath a lower surface 501 of the two support arms 50. Thereby, one mono-component construction element 101 each is positioned between and releasably connectable to an upper surface 602 of the structural part 60 and the lower surface 501 of the two support arms 50. Alternatively, at least one construction element 101 is positioned between and releasably connectable or connected to an upper surface of one of the structural parts 60 and the lower surface of the two support arms 50. In this case one and the same construction element 101 is arranged beneath the lower surface 501 of both support arms 50. In another embodiment a multi-component construction element 101 can be provided comprising several construction elements aligned next to one another, wherein adjacent construction elements can be detachably connected to one another. Moreover, the level at which the structural part 60 is situated can be individually adjustable and/or controllable for each of the structural parts 60. For instance, one or more lengthwise adjustable, *e.g.* telescopically adjustable, construction elements 101 can be provided.

Favourably, the vertical tillage depth of the harrow disc assemblies 704a and the harrow assembly 704, respectively, is in the range of 0.05 meters to 0.55 meters, beneficially in the range of 0.05 meters to 0.45 meters, particularly in the range of 0.05 meters to 0.35 meters. Thus, the implement 10 is applicable to both conservation tillage and conventional tillage, wherein the vertical tillage depth is comparatively finely adjustable to the respective type of soil and soil conditions. In case of conventional soil cultivation the working depth and tillage depth, respectively, can actually be configured deeper than that of machines known from the state of the art. The four fasteners 601 and the five second linking elements 701, respectively, are comprised in a force-closed and/or form-closed and/or frictional connection. The fasteners 601 and/or second linking elements 701 can also comprise a clamping joint component, a sliding joint component, a snap fastening, an articulation component, a latching connection component, a coupling component and/or a hitching component. For instance, the fasteners 601 and/or the second linking elements 701 are selected from group consisting of clamping joints, sliding joints, snap fastenings, articulations, latching connections, couplings and hitchings. Each fastener 601 and/or second linking element 701 can comprise or be a block clamp, a hinge, a bayonet joint, a coupling or a hitch. Alternatively, or as a complement, at least one device (not shown) is detachably affixable to the fasteners 601 and/or the second linking elements 701 each. The device may comprise or be a clamping joint, *e.g.* a block clamp, an articulation, *e.g.* a hinge, a latching connection, *e.g.* a bayonet joint, a coupling and/or a hitch.

As can be seen from **Fig. 2** each of the harrow disc assemblies 704a of the harrow assembly 704 is positioned behind the cutter assemblies 304 and the cylinder assembly 305, particularly at a lateral position between vicinal cutter assemblies 304. The second linking elements 701 comprise a vertical adjustment each containing three perforated plates 701a and two locating elements 701b each (cf. **Fig. 1**), *e.g.* screws, pins and/or bolts, particularly in conjunction with a nut. One or more of the locating elements 701b can also be a fastening element or comprise at least one fastening means. One of the perforated plates 701a is affixed or releasably affixed to each of the harrow disc assemblies 704a. By simply loosening the two locating elements 701b the respective harrow disc assembly 704a can be moved vertically until the desired position is reached and detachably affixed by the locating element 701b again in a reliable and safe manner. Advantageously, the vertical tillage depth of each of the harrow disc assemblies 704a can individually be adjusted and/or controlled in a very simple and cost-effective manner.

Alternatively, or as a complement, the level at which the at least one structural part 60 is situated is individually adjustable and/or controllable for each of the structural parts 60. Favourably, the vertical tillage depth of the second assemblies 70 detachably affixable or affixed to a structural part 60 is in the range of 0.05 meters to 0.55 meters, beneficially in the range of 0.05 meters to 0.45 meters, particularly in the range of 0.05 meters to 0.35 meters. Thus, the implement 10 is applicable to both conservation tillage and conventional tillage, wherein the vertical tillage depth is comparatively finely adjustable to the respective type of soil and soil conditions. In case of conventional soil cultivation the working depth and tillage depth, respectively, can actually be configured deeper than that of machines known from the state of the art.

Each of the three harrow disc assemblies 704a being detachably affixed to a section of the sole structural part 60, which extends between the two support arms 50, comprises a first harrow disc 704b and a second harrow disc 704c. The two harrow disc assemblies 704a being detachably affixed to a section of the sole structural part 60 each, which extends on an outer left hand side or an outer right hand side (cf. **Fig. 1** and **Fig. 2**), respectively, of one of the support arms 50, only comprise one second harrow disc 704c or one first harrow disc 704b, respectively. All harrow discs 704b,c of the harrow disc assemblies 704a comprised in the implement 10 according to **Fig. 1** to **Fig. 3** have a smooth circumferential edge 704d each. Flat or concave harrow discs 704b,c having a smooth or toothed circumferential edge 704d conduct an additional grinding of stubbles from crop residues and the incorporation of chopped and/or crushed organic substances into the soil. Size and type of a harrow disc 704b,c depend on the selection of the soil preparation technology. The harrow discs 704b,c can be arranged in various sequences and/or manners. Thus, there are many possibilities for configurations. Moreover, the first harrow disc 704b and the second harrow disc 704c of each harrow disc assembly 704a are arranged in a staggered mode along an axis A_{P2} orientated perpendicular to the second longitudinal axis A_{L2}, wherein a plurality of first harrow discs 704b and a plurality of second harrow discs 704c are aligned identically each. Alternatively, or as a complement, the harrow assembly 704 is selected from the group consisting of a set of harrow disc assemblies 704a comprising at least one flat or one concave harrow disc 704b,c having a smooth or toothed circumferential edge704d, chisel assemblies 705 (**Fig. 6**) and assemblies comprised in a buster 706 (**Fig. 7**). For instance, as an alternative to the harrow disc assemblies shown in **Fig. 1** to **Fig. 3** a plurality of chisel assemblies 705 can be detachably affixed to the structural part 60 of the supporting frame 40 and a plurality of assemblies comprised in a buster 706 can be detachably affixed to a further structural part 60 (not shown in **Fig. 1** to **Fig. 3**) of the supporting frame 40, wherein the further structural part 60 is positioned behind the given structural part 60. The purpose of a chisel assembly 705 shown in **Fig. 6** is to eliminate soil compactions by cutting the soil in a depth of up to 0.55 metres, advantageously in the range of 30 metres to 55 metres. A chisel 705a itself loosens the soil and performs crumbling of the field horizon and the subsoil horizon, respectively, without turning the surface soil. Additionally, the chisel 705a tears off the soil from the monolith. Cutting through the interspaces advantageously contributes to a better water absorption of the soil and to a deeper intrusion of water into the soil. Size and type of the chisel 705a itself depend on the choice of the soil preparation technology. An assembly comprised in a buster 706 (**Fig. 7**) has the function of covering harvest residuals for the winter, while a future planting and seed bed, respectively, is generated. As a consequence, the plant residues can additionally rot and be used as natural biological fertiliser in spring. Size and form of a tine 706a comprised in the assembly 706 depend on the selection of the soil preparation technology.

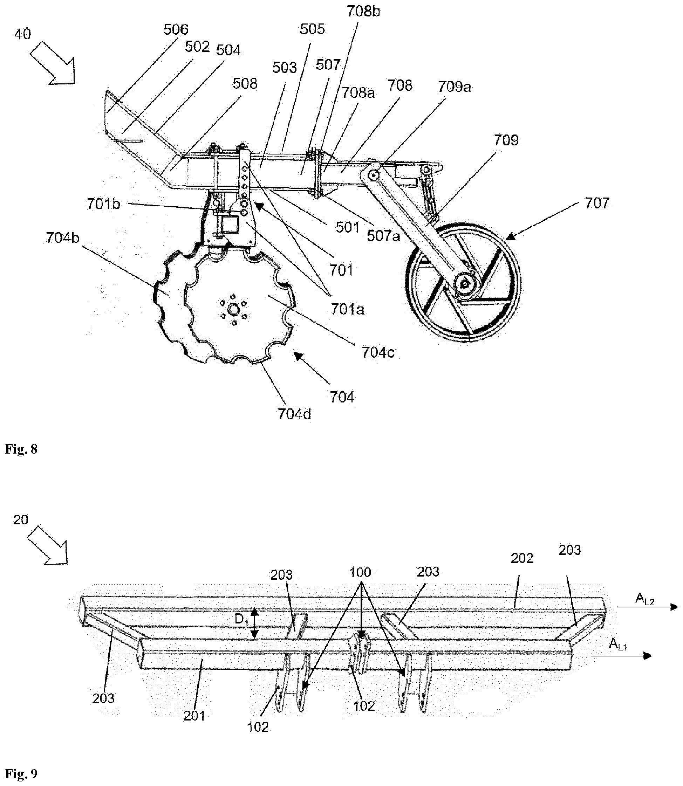

**Fig. 8** shows a side view of a supporting frame 40 comprising a harrow assembly 704 containing harrow disc assemblies 704a comprising harrow discs 704b,c having a toothed circumferential edge 704d and a roller assembly 707. The latter is comprised in the implement 10 presented in **Fig. 1** to **Fig. 3****.** The roller assembly 707 comprises a cylinder's corpus 707a defining a common axis A_{C2} of a plurality of wheel assemblies 707b, wherein the wheel assemblies 707b are forming a spiral. Alternatively, the wheel assemblies 707b of the roller assembly 707 can be individual components. In general, a roller assembly 707 has major impact on the final quality of soil tillage. It allows levelling and compacting the soil and the additional crumbling of the clods and the smoothing of the field surface. The respective design of the roller assembly 707 depends on the type of the soil and the intended use. With respect to the implement 10 shown in **Fig. 1** to **Fig. 3** the wheel assemblies 707b comprised in the roller assembly 707 are beneficially connected to the cylinder's corpus 707a by a force-closed and/or form-closed and/or frictional connection. Alternatively, or as a complement, the wheels 707b comprised in the roller assembly are connected to the cylinder's corpus 707a by an adhesive, a solder or a welded connection. As can be seen from **Fig. 1** to **Fig. 3** and **Fig. 8** a first end 707c and a second end 707d of the cylinder's corpus 707a of the roller assembly 707 are detachably affixed to an extension arm 708 each, wherein the extension arms 708 are provided as square tubes, particularly containing or being made of a metal. Alternatively, at least one of the extension arms 708 can be a tube or a sheet, particularly containing or being made of a metal. Thereby a slotted plate 709 and suitable fixings 709a, particularly screws, pins and/or bolts, are used for releasably connecting the first end 707c and the second end 707d of the cylinder's corpus 707a, respectively, with one of the extension arms 708 each. A first end 708a of each extension arm 708 is detachably affixed to a first end 507 of a second section 503 of the corresponding support arm 50. The simplest way for this affixing is the usage of perforated sheets 507a and 708b being provided at the first end 507 and the first end 708a, respectively, and fastening means 708c, particularly screws, pins and/or bolts.

In **Fig. 9** the supporting structure 20 comprised in the implement 10 for soil tillage according to **Fig. 1** is presented. The supporting structure 20 comprises the first structural member 201 and the distal structural member 202. The latter are arranged in tandem at the predefined distance D₁ from each other, with the first longitudinal axis A_{L1} of the first structural member 201 and the second longitudinal axis A_{L2} of the distal structural member 202 being parallel to one another. Moreover, the first structural member 201 and the distal structural member 202 are linked by four joining elements 203. The linkage can be a detachable one. Alternatively, the supporting structure 20 can comprise only the first structural member 201 or another structural member (not shown), *e.g.* between the first structural member 201 and the distal structural member 202. In any case, at least one first assembly 30 applicable to soil tillage can be detachably affixed to the first structural member 201 and/or to the distal structural member 202 each by at least one first linking element 301. Alternatively, or as a complement, a plurality of first assemblies 30 can be detachably affixed to the first structural member 201 and/or to the distal structural member 202 by one and the same first linking element 301. A plurality of first assemblies 30 is arrangeable along the first longitudinal axis A_{L1} of the first structural member 201 or along the second longitudinal axis A_{L2} of the distal structural member 202 at the predefined distance D₂ from each other.

In general, the supporting structure 20 serves three main purposes: Firstly, the first assemblies 30 can be detachably affixed to it. Secondly, the supporting frame 40 to which the second assemblies 70 are releasably affixable is connectable to it. Thirdly, the implement 10, for instance according to the embodiment shown in **Fig. 1** to **Fig. 3****,** can be connected to a tractor (not shown) via a linkage between the supporting structure 20 and the tractor. Particularly the first structural member 201 comprises at least one coupling gear 100 being, particularly detachably, affixed to it. Advantageously, the coupling gear 100 comprises or is a perforated plate 102. Then the implement can simply be connected to various types of tractors by applying at least one safety bolt 103. Alternatively, or as a complement, the coupling gear 100 comprises or is a hitch safety bolt or a forked drawbar. The coupling gear 100 can also comprise or be a ball socket. Favourably, the coupling gear 100 comprising or being a ball socket is compatible with or adaptable to miscellaneous kinds of hitches so that the implement 10 can be connected to various types of tractors. Besides, the supporting structure 20 can be equipped with a plant (not shown) for introducing material into the soil, *i.e.* seeds and/or a solid and/or a liquid fertiliser. Introduction of one or more fertilisers into the soil can favourably be done simultaneously with the execution of other agricultural works. Thus, the implement 10, for instance according to the embodiment shown in **Fig. 1** to **Fig. 3****,** is suitable for all agricultural works, with the exception of harvesting.

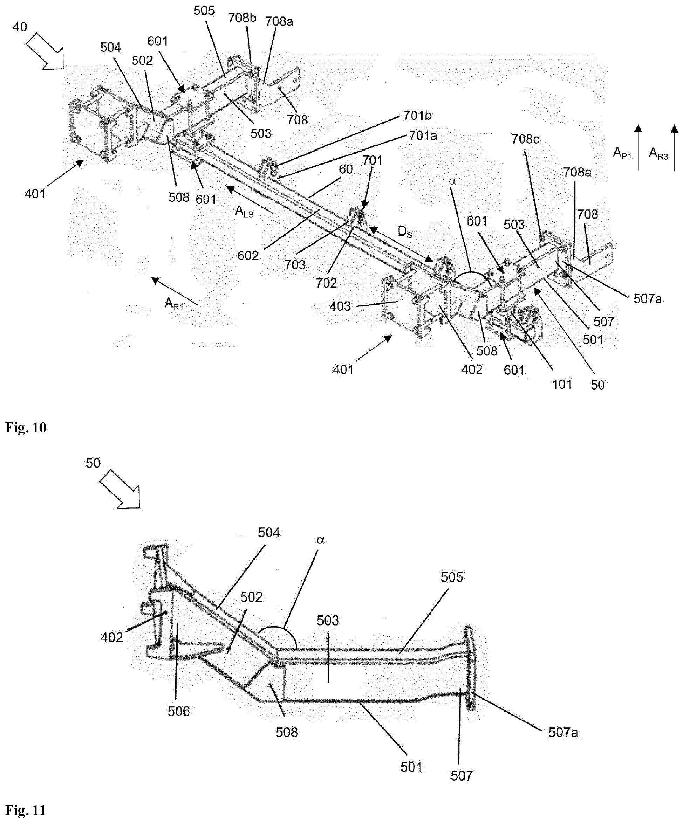

**Fig. 10** shows a supporting frame 40 suitable for the herein described implement 10 for soil tillage. The supporting frame 40 is detachably connectable to the supporting structure 20 by the two connecting elements 401 such that it extends from the distal structural member 202 of the supporting structure 20. Furthermore, the supporting frame 40 comprises two support arms 50 being detachably connectable to a distal structural member 202 of the supporting structure 20 shown in **Fig. 9****,** for instance. In addition, the supporting frame 40 comprises one structural part 60 being detachably connected to the two support arms 50 and to which five second assemblies 70 can be, particularly detachably, affixed by the five second linking elements 701 (one of them is hidden by one of the two support arms 50) comprising a first section 702 and a second section 703. The second assemblies 70 are arrangeable along the longitudinal axis A_{LS} of the structural part 60 at a predefinable distance D_{S} from each other. In mounted condition the longitudinal axis A_{LS} of the structural parts 60 is parallel to the first longitudinal axis A_{L1} and to the second longitudinal axis A_{L2}. The second assemblies 70 are independently from each other laterally adjustable each, particularly along the longitudinal axis A_{LS} of the structural part 60. This is of advantage as the lateral distance between two second assemblies 70 can be adapted individually in a particular case. Alternatively, or as a complement, the second assemblies 70 are independently from each other vertically adjustable each, particularly along an axis A_{P1} orientated perpendicular to the longitudinal axis A_{LS} of the structural part 60. As a result, in a particular case the working depth and tillage depth, respectively, can favourably be adjusted individually for each type of assembly, *e.g.* for a harrow assembly 704, as well as for each assembly within one work unit of the herein described implement, *e.g.* for a harrow disc assembly 704a. As can be seen from **Fig. 10** a construction element 101 is positioned between and releasably connectable to an upper surface 602 of the structural part 60 and the lower surface 501 of the two support arms 50 each. The level at which the structural part 60 is situated is individually adjustable and/or controllable. For instance, the construction element 101 can be lengthwise adjustable, *e.g.* telescopically. Favourably, the vertical tillage depth of harrow disc assemblies 704a and a harrow assembly 704, respectively, is in the range of 0.05 meters to 0.55 meters, beneficially in the range of 0.05 meters to 0.45 meters, particularly in the range of 0.05 meters to 0.35 meters. Thus, an implement 10 comprising a supporting frame as presented in **Fig. 10** is applicable to both conservation tillage and conventional tillage, wherein the vertical tillage depth is comparatively finely adjustable to the respective type of soil and soil conditions. In case of conventional soil cultivation the working depth and tillage depth, respectively, can actually be configured deeper than that of machines known from the state of the art. The four fasteners 601 and the five second linking elements 701, respectively, are comprised in a force-closed and/or form-closed and/or frictional connection. The fasteners 601 and/or the second linking elements 701 can also comprise a clamping joint component, a sliding joint component, a snap fastening, an articulation component, a latching connection component, a coupling component and/or a hitching component. For instance, the fasteners 601 and/or the second linking elements 701 is selected from group consisting of clamping joints, sliding joints, snap fastenings, articulations, latching connections, couplings and hitchings. Each fastener 601 and/or the second linking element 701 can comprise or be a block clamp, a hinge, a bayonet joint, a coupling or a hitch. Alternatively, or as a complement, at least one device (not shown) is detachably affixable to the fasteners 601 and/or the second linking elements 701 each. The device may comprise or be a clamping joint, *e.g.* a block clamp, an articulation, *e.g.* a hinge, a latching connection, *e.g.* a bayonet joint, a coupling and/or a hitch. Furthermore, the supporting frame 40 presented in **Fig. 10** comprises two extension arms 708, wherein a first end 708a of each extension arm 708 is detachably affixed to a first end 507 of the second section 503 of the corresponding support arm 50. The simplest way for this affixing is the usage of perforated sheets 507a and 708b being provided at the first end 507 and the first end 708a, respectively, and fastening means 708c, particularly screws, pins and/or bolts. The extension arms 708 are provided as sheets, particularly containing or being made of a metal. Alternatively, at least one of the extension arms 708 can be a tube or a square tube, particularly containing or being made of a metal. For instance, a roller assembly 707 can be detachably connected with the extension arms 708 of the supporting frame 40. Advantageously, the supporting frame 40 is tiltably mountable on a supporting structure 20 (not shown in **Fig. 10**) and tiltable about a rotation axis A_{R1} being parallel to a first longitudinal axis A_{L1} and a second longitudinal axis A_{L2} of the supporting structure 20 (not shown in **Fig. 10**), which are - in mounted condition - parallel to the longitudinal axis A_{LS} of the structural part 60. A tiltable mounting of the supporting frame 40 comprising second assemblies 70, where appropriate, is beneficial in that the supporting frame 40 can be folded up when not needed, particularly on the way to the field and back. Moreover, the supporting frame 40 can advantageously be folded up if only first assemblies 30 detachably affixed to a first structural member 201 and/or a distal structural member 202 of a supporting structure 20 (not shown in **Fig. 10**) are to be applied for soil tillage. At least one element 508 (hidden) can provided by means of which the supporting frame 40 is tiltable about the rotation axis A_{R1}. The element 508 can comprise or simply be an articulation, e.g. a hinge.

The structural part 60 of the supporting frame 40 as shown in **Fig. 10** and the structural members 201, 202 of the supporting structure 20 as presented in **Fig. 9** **-** comprising, in mounted condition, first assemblies 30 and second assemblies 70 each - can favourably be arranged one after the other in a sequence complying with the order of their usage within the cycle of agrotechnical tasks. Particularly, due to the fact that the structural part 60 is situated beneath the lower surface 501 of the two support arms 50 (cf. **Fig. 10**) a comparatively deep vertical tillage depth of up to 0.55 meters is possible when making use of the herein described implement 10 (**Fig. 1** to **Fig. 3**). The wide range of the vertical tillage depth realisable by the disclosed implement 10 as well as the simple adaptability to different field sizes and, particularly, to different seedbed widths are key differences from soil preparation and/or tillage systems according to the state of the art. The implement 10 is applicable to a comparatively large variety of soil preparation technologies, including conservation tillage and conventional tillage, as well as to a relatively broad range of soil and climate conditions, regardless of the field size and width of the planting bed.

**Fig. 11** shows the support arm 50 comprised in the supporting frame 40 according to **Fig. 10****.** The support arm 50 comprises a first section 502 and a second section 503. The first section 502 and the second section 503 are, particularly detachably, linked. Moreover, an angle α between an upper surface 504 of the first section 502 and an upper surface 505 of the second section 503 is an obtuse angle which is, for instance, ranging from 100 degrees to 170 degrees, favourably from 110 degrees to 160 degrees, particularly from 115 degrees to 165 degrees. A first end 506 of the first section 502 is detachably connectable to the distal structural member 202 of the supporting structure 20 as shown in **Fig. 9** by at least one fixing element. For this reason the first part 402 of a two-piece component is, particularly detachably, affixed to the first end 506 of the first section 502 of the support arm 50. The at least one fixing element can comprise a clamping joint component, a sliding joint component, an articulation component, a latching connection component, a coupling component and/or a hitching component. Favourably, the at least one fixing element is selected from group consisting of clamping joints, sliding joints, articulations, latching connections, couplings and hitchings. For instance, at least one fixing element comprises or is a block clamp, a hinge, a bayonet joint, a coupling and/or a hitch. Alternatively, or as a complement, at least one device (not shown in **Fig. 11**) can be provided which is detachably affixable to the at least one fixing element. The device may comprise or be a clamping joint, *e.g.* a block clamp, an articulation, *e.g.* a hinge, a latching connection, *e.g.* a bayonet joint, a coupling and/or a hitch. In addition, the support arm 50 can be tiltably mounted on the supporting structure 20 as presented in **Fig. 9****.** A tiltable mounting of the two support arms 50 comprised in the supporting frame 40 as shown in **Fig. 10** is beneficial as the support arms 50 and consequently the supporting frame 40 can be folded up when not needed, particularly on the way to the field and back. Moreover, the supporting frame 40 can advantageously be folded up if only first assemblies 30 are to be applied for soil tillage. The support arms 50 can be tiltable about the rotation axis A_{R1} being parallel to the first longitudinal axis A_{L1} and the second longitudinal axis A_{L2}. In an alternative embodiment it is provided that at least one of the at least two support arms 50 is tiltable about a rotation axis A_{R2} (not shown) being perpendicular to the first longitudinal axis A_{L1} and the second longitudinal axis A_{L2}.

According to another embodiment of the implement 10 at least one lateral section (not shown) is detachably connectable or connected to the supporting structure 20 and/or to the supporting frame 40 each by at least one fixing means each. For instance, a longitudinal axis A_{LL} (not shown) of at least one of the lateral sections can be identical or parallel with the first longitudinal axis A_{L1}, the second longitudinal axis A_{L2} or the longitudinal axis A_{LS}. Alternatively, or as a complement, the longitudinal axis A_{LL} and at least one axis selected from the group consisting of the first longitudinal axis A_{L1}, the second longitudinal axis A_{L2} and the longitudinal axis A_{LS} can be arranged in an acute angle. Thereby, first assemblies 30 or second assemblies 70 are releasably affixable or affixed to the respective lateral section. A further embodiment of the implement 10 provides that at least one of the lateral sections is tiltably mounted on the supporting structure 20 or on the supporting frame 40. Thereby, each of the lateral sections is tiltable about a rotation axis A_{R3} being perpendicular to the second longitudinal axis A_{L2} and/or to the longitudinal axis A_{LS}.

The implement 10 according to **Fig. 1** to **Fig. 3** is applicable to soil preparation and tillage for the growing of a large spectrum of crop plants including, but not limited to, maize, cereals, olive cultivation, pulse, sunflower, cotton plants, sugar cane and miscellaneous vegetables. Particularly, with respect to crops like sunflower, cotton plants and sugar cane, for instance, use of the above-described implement 10 is highly efficient and cost-effective. Favourably, the first assemblies 30 and the second assemblies 70, respectively, arranged along the longitudinal axis A_{L1}, A_{L2} or A_{LS}, respectively, of one and the same structural member 201, 202 or structural part 60, respectively, are of the same type each. Alternatively, or as a complement, the first assemblies 30 and/or the second assemblies 70 arranged along the longitudinal axis A_{L1}, A_{L2} or A_{LS} of one and the same structural member 201, 202 or structural part 60, respectively, differ from each other. That means that miscellaneous types of first assemblies 30 and second assemblies 70, respectively, are arrangeable along the longitudinal axis A_{L1}, A_{L2} or A_{LS} of one and the same structural member 201, 202 or structural part 60, respectively.

Overall, the shown implement 10 for soil tillage shown in **Fig. 1** to **Fig. 3** is characterised by user-friendly operation, very good safety mechanisms, reliability, robustness and very good performance. It is a comparatively versatile, maintenance-friendly, affordable and cost-saving alternative to machines according to the state of the art.

The invention is not limited to any one of the embodiments described above, but modifiable in various ways.

As can be seen, the present invention concerns an implement for soil tillage comprising a supporting structure and a supporting frame. The supporting structure comprises at least one structural member, particularly a first structural member and a distal structural member. The supporting frame extends from a distal structural member - being the only one, if exactly one structural member is provided - of the supporting structure and comprises at least two support arms being detachably connected to the distal structural member of the supporting structure and at least one structural part. The latter is detachably connected to at least two of the support arms and situated at a level being lower than a lower surface of the at least two support arms. A plurality of tillage assemblies can be detachably affixed to one or more of the structural members of the supporting structure and/or to one or more of the structural parts and/or to one of the support arms each by at least one first linking element, fastener and/or second linking element. Alternatively, or as a complement, a plurality of assemblies can be detachably affixed to one or more of the structural members and/or to one or more of the structural parts and/or to the at least two support arms by one and the same first linking element, fastener and/or second linking element each. The invention also relates to a coulter, use of such a coulter, a cylinder assembly, use of such a cylinder assembly, a framing for an implement for soil tillage and a process for manufacturing an implement for soil tillage.

Particularly, due to the fact that the supporting frame comprises at least one structural part being situated beneath the lower surface of the at least two support arms a comparatively deep vertical tillage depth of up to 0.55 meters is possible when making use of the above claimed implement. Moreover, the flexible design and layout of the herein claimed implement, especially of the supporting structure and the supporting frame, favourably provides the opportunity to easily adapt the implement to different field sizes and seedbed widths. The wide range of the vertical tillage depth realisable by the herein disclosed implement as well as its simple adaptability to different field sizes and, particularly, to different seedbed widths are key differences from soil preparation and/or tillage systems according to the state of the art. Beneficially, the implement is applicable to a comparatively large variety of soil preparation technologies, including conservation tillage and conventional tillage, as well as to a relatively broad range of soil and climate conditions, regardless of the field size and width of the planting bed. The herein claimed implement works robustly on essentially all soils and under essentially all climate conditions. It is applicable to soil preparation and tillage for the growing of a large spectrum of crop plants. Particularly, with respect to crop like sunflower, cotton plants and sugar cane, for instance, use of the above-described implement is highly efficient and cost-effective. The herein described implement for soil tillage combines the advantages of miscellaneous soil cultivation methods, namely ploughing, flat cutting and surface working. It is advantageously suitable for both spring and autumn tillage. The multifunctional nature of the herein claimed implement does not only comply with the biological characteristics of the cultigens and contemporary requirements of soil tillage, but also provides high yields and an economical plant production. Good results, *i.e.* good harvests, are even gained on new and/or unprepared farmland and weed-infested soils. Furthermore, due to its simple and straightforward construction it can be manufactured and assembled in a simple and cost-effective process, regardless of the size of production line. Moreover, it can also be modified and reconfigured, even on the field, *e.g.* for another cultivation, in a straightforward manner without specific knowledge and special tools.

Overall, the claimed implement for soil tillage is characterised by user-friendly operation, very good safety mechanisms, reliability, robustness and very good performance. The herein described implement is a comparatively versatile, maintenance-friendly, affordable and cost-saving alternative to machines according to the state of the art.

All features and advantages arising from the claims, the description and the figures, including design details, spatial arrangements and procedure steps, can be essential to the invention, either individually or in various combinations.

**List of Reference Signs**

| | | | |
|---|---|---|---|
| 10 | implement | 309 | outer circumferential surface |
| 100 | coupling gear | 311 | coulter mount |
| 101 | construction element | 40 | supporting frame |
| 102 | perforated plate | 401 | connecting element |
| 103 | safety bolt | 402 | first part of a two-piece component |
| 20 | supporting structure | 403 | second part of the two-piece component |
| 201 | first structural member | 50 | support arm |
| 202 | distal structural member | 501 | lower surface of the support arm |
| 203 | joining element | 502 | first section of the support arm |
| 30 | first assembly | 503 | second section of the support arm |
| 301 | first linking element | 504 | upper surface of the first section |
| 302 | first section of a two-piece device | 505 | upper surface of the second section |
| 303 | second section of the two-piece device | 506 | first end of the first section |
| 304 | cutter assembly | 507 | first end of the second section |
| 304a | cutting blade | 507a | perforated sheet |
| 304b | cutting edge portion | 508 | element |
| 304c | cutter brace | 60 | structural part |
| 304d | distal portion of the cutter brace | 601 | fastener |
| 304e | cutter support | 602 | upper surface of the structural part |
| 304f | distal end of the cutter support | 70 | second assembly |
| 305 | cylinder assembly | 701 | second linking element |
| 305a | first axial end portion of the cylinder assembly | 702 | first section of a two-piece device |
| | | 703 | second section of the two-piece device |
| 305b | second axial end portion of the cylinder assembly | 701a | perforated plate |
| | | 701b | locating elements |
| 305c | cylinder brace | 704 | harrow assembly |
| 305d | distal end of the cylinder brace | 704a | harrow disc assembly |
| 306a | radial coulter assembly | 704b | first harrow disc |
| 306b | longitudinal coulter assembly | 704c | second harrow disc |
| 306c | guiding element | 704d | circumferential edge |
| 307 | cylinder body | 705 | chisel assembly |
| 308 | fitting wheel | 705a | chisel |
| 706 | assembly comprised in a buster | D₁ | distance |
| 706a | tine | D₂ | distance |
| 707 | roller assembly | D_{S} | distance |
| 707a | cylinder's corpus | A_{L} | longitudinal axis of a structural member |
| 707b | wheel assembly of the roller assembly | A_{L1} | first longitudinal axis |
| 707c | first end of the cylinder's corpus | A_{L2} | second longitudinal axis |
| 707d | second end of the cylinder's corpus | A_{LG} | longitudinal axis of a guiding element |
| 708 | extension arm | A_{LS} | longitudinal axis of a structural part |
| 708a | first end of the extension arm | A_{R1} | rotation axis |
| 708b | perforated sheet | A_{R2} | rotation axis |
| 708c | fastening means | A_{R3} | rotation axis |
| 709 | slotted plate | A_{LA} | longitudinal axis of the second section of the support arm |
| 709a | fixing | | |
| 801 | cutting edge | A_{C1} | common axis |
| 802 | tooth | A_{C2} | common axis |
| 81 | longish coulter | A_{P1} | axis orientated perpendicular to A_{LS} |
| 82 | ring-shaped coulter | A_{P2} | axis orientated perpendicular to A_{L2} |
| | | α | obtuse angle |
| | | β | lateral angle |

## Claims

1. An implement (10) for soil tillage comprising
▪ a supporting structure (20) comprising at least one structural member (202), wherein at least one first assembly (30) applicable to soil tillage can be detachably affixed to one or more of the structural members (201, 202) each by at least one first linking element (301), and
▪ a supporting frame (40)
- extending from a distal structural member (202) of the supporting structure (20),
- being detachably connected to the supporting structure (20) by at least one connecting element (401), and
- comprising
i. at least two support arms (50) being detachably connected to the distal structural member (202) of the supporting structure (20) and
ii. at least one structural part (60) being detachably connected to at least two of the support arms (50) by at least one fastener (601), the at least one structural part (60) being situated beneath a lower surface (501) of the at least two support arms (50),
wherein at least one second assembly (70) applicable to soil tillage can be detachably affixed to one or more of the structural parts (60) each by at least one second linking element (701).

2. The implement (10) according to claim 1,
wherein at least one construction element (101) is positioned between and releasably connected to
- an upper surface (602) of one of the structural parts (60), and
- the lower surface (501)
i. of the at least two support arms (50), or
ii. of each of the at least two support arms (50);
and/or
wherein a level at which the at least one structural part (60) is situated is individually adjustable and/or controllable for each of the structural parts (60);
and/or
wherein
- a plurality of first assemblies (30) is arrangeable along a longitudinal axis (A_{L}) of each of the structural members (201, 202), at a predefinable distance (D₂) from each other, and/or
- a plurality of second assemblies (70) is arrangeable along a longitudinal axis (A_{LS}) of each of the structural parts (60), at a predefinable distance (D_{S}) from each other,
the longitudinal axis (A_{LS}) of at least one of the structural parts (60) being parallel to the longitudinal axis of at least one of the structural members (201, 202).

3. The implement (10) according to any one of claims 1 to 2,
wherein the supporting structure (20) comprises at least the distal structural member (202) and a first structural member (201), which are
- arrangeable in tandem at a predefinable distance (D₁) from each other, with a first longitudinal axis (A_{L1}) of the first structural member (201) and a second longitudinal axis (A_{L2}) of the distal structural member (202) being parallel to one another, and
- detachably linkable by at least one joining element (203);
and/or
wherein at least one lateral section is detachably connectable to the supporting structure (20) and/or to the supporting frame (40) by at least one fixing means each.

4. The implement (10) according to any one of claims 1 to 3,
wherein at least one connecting element (401) comprises a two-piece component, wherein a first part (402) of the two-piece component is
- detachably affixable to the supporting frame (40), and
- releasably connectable with a second part (403) of the two-piece component, the second part (403) being releasably affixable to the distal structural member (202) of the supporting structure (20).

5. The implement (10) according to any one of claims 1 to 4,
wherein at least one first linking element (301) and/or second linking element (701) comprises a two-piece device,
wherein a first section (302, 702) of the two-piece device is
- detachably affixable to
i. one of the first assemblies (30) or one of the structural members (201, 202), or
ii. one of the second assemblies (70) or one of the structural parts (60)
and
- releasably connectable with a second section (303, 703) of the two-piece device, the second section (303, 703) being releasably affixable to one of the structural members (201, 202) or to one of the structural parts (60).

6. The implement (10) according to any one of claims 1 to 5,
wherein at least two support arms (50) are
- tiltably mounted on the supporting structure (20), and
- tiltable about a rotation axis (A_{R1}) being parallel to the second longitudinal axis (A_{L2});
and/or
wherein the supporting frame (40) is
- tiltably mounted on the supporting structure (20), and
- tiltable about the rotation axis (A_{R1}) being parallel to the second longitudinal axis (A_{L2}).

7. The implement (10) according to any one of claims 1 to 6, wherein at least two of the support arms (50) comprise a first section (502) and a second section (503) each,
- the first section (502) and the second section (503) being detachably linkable,
- an angle α between an upper surface (504) of the first section (502) and an upper surface (505) of the second section (503) is an obtuse angle, and
- a first end (506) of the first section (502) being detachably connectable to the distal structural member (202) of the supporting structure (20).

8. The implement (10) according to claim 7, wherein a longitudinal axis (A_{LA}) of the second section (503) of each of the support arms (50) is perpendicular to the second longitudinal axis (A_{L2}) of the distal structural member (202).

9. The implement (10) according to any one of claims 1 to 8,
wherein the first assemblies (30) and/or the second assemblies (70) are independently from each other laterally adjustable each; and/or
wherein the first assemblies (30) and/or the second assemblies (70) are independently from each other vertically adjustable each; and/or
wherein at least one joining element (203), first linking element (301), connecting element (401), fastener (601), second linking element (701) and/or fixing means comprises a vertical adjustment.

10. The implement (10) according to any one of claims 1 to 9,
wherein at least three of the first assemblies (30) and/or of the second assemblies (70) are arrangeable in a staggered manner; and/or
wherein the at least one first assembly (30) and the at least one second assembly (70) are independently from each other selected from the group consisting of cutter assemblies (304), cylinder assemblies (305), coulter assemblies (306a, 306b), harrow assemblies (704) and roller assemblies (707).

11. The implement (10) according to any one of claims 1 to 10, wherein
- the at least one first assembly (30) is selected from the group consisting of
i. cutter assemblies (304),
ii. cylinder assemblies (305), and
iii. coulter assemblies (306a, 306b), and
- the at least one second assembly (70) is selected from the group consisting of
i. harrow assemblies (704) comprising at least one disc coulter (704b, 704c)
ii. chisel assemblies (705),
iii. assemblies comprised in a buster (706), and
iv. roller assemblies (707).

12. The implement (10) according to claim 11, wherein the cylinder assembly (305) comprises
i. a cylinder body (307) defining a common axis (A_{C1}) of a plurality of radial coulter assemblies (306a) being arranged along the common axis (A_{C1}) and comprising a fitting wheel (308) each, each fitting wheel (308) having at least one radially outwards extending ring-shaped coulter (82) on an outer circumferential surface (309), each of the radial coulter assemblies (306a) particularly being positioned immediately behind one of the cutter assemblies (304), and
ii. a plurality of longitudinal coulter assemblies (306b) being arranged along the common axis (A_{C1}) between vicinal radial coulter assemblies (306a), each of the longitudinal coulter assemblies (306b) comprising at least two radially outwards extending longish coulters (81) being arranged along a circumference of the cylinder body (307).

13. A coulter
i. having a longish shape (81) and comprising
- a cutting edge (801) having a serrated (802), a triangular, a trapezoid, an arch, a convex or a concave shape, and
- at least two elongated apertures, each aperture extending between two long sides of the longish coulter (81),
or
ii. being ring-shaped (82) and comprising at least two complementary parts, each part comprising a radially outwards extending cutting edge (801) having a serrated (802) shape.

14. Use of at least
- one coulter having a longish shape (81) according to claim 13 and
- one coulter being ring-shaped (82) according to claim 13 for manufacturing a cylinder assembly (305) for an implement (10) for soil tillage.

15. A process for manufacturing a cylinder assembly (305) for an implement (10) for soil tillage using
i. at least two coulters having a longish shape (81), wherein at least one longish coulter (81) comprises
- a cutting edge (801) having a serrated (802), a triangular, a trapezoid, an arch, a convex or a concave shape, and
- at least two elongated apertures, each aperture extending between two long sides of the longish coulter (81), and
ii. at least two coulters being ring-shaped (82), wherein at least one ring-shaped coulter (82) comprises at least two complementary parts, each part comprising a radially outwards extending cutting edge (801) having a serrated (802) shape, comprising the steps of
a) providing a cylinder body (307) defining a common axis (A_{C1}),
b) providing at least two fitting wheels (308) and the at least two ring-shaped coulters (82),
c) providing the at least two longish coulters (81),
d) arranging at least two radial coulter assemblies (306a) along the common axis (A_{C1}), the radial coulter assemblies (306a) comprising one fitting wheel (308) each having at least one ring-shaped coulter (82) on an outer circumferential surface (309), the ring-shaped coulters (82) extending radially outwards, and
e) arranging at least one longitudinal coulter assembly (3 06b) along the common axis (A_{C1}) between vicinal radial coulter assemblies (306a), each of the longitudinal coulter assemblies (306b) comprising at least two radially outwards extending longish coulters (81) being arranged along a circumference of the cylinder body (307).

16. A cylinder assembly (305) being rotatably and detachably affixable to a frame of an implement (10) for soil tillage, comprising
- a cylinder body (307) defining a common axis (A_{C1}) of a plurality of radial coulter assemblies (306a) being arranged along the common axis (A_{C1}) and comprising a fitting wheel (308) each, each fitting wheel (308) having at least one radially outwards extending ring-shaped coulter (82) on an outer circumferential surface (309), and
- a plurality of longitudinal coulter assemblies (306b) being arranged along the common axis (A_{C1}) between vicinal radial coulter assemblies (306a), each of the longitudinal coulter assemblies (306b) comprising at least two radially outwards extending longish coulters (81) being arranged along a circumference of the cylinder body (307),
wherein
i. at least one ring-shaped coulter (82) comprises at least two complementary parts, each part comprising a radially outwards extending cutting edge (801) having a serrated (802) shape
and/or
ii. at least one longish coulter (81) comprises
- a cutting edge (801) having a serrated (802), a triangular, a trapezoid, an arch, a convex or a concave shape, and
- at least two elongated apertures, each aperture extending between two long sides of the longish coulter (81).

17. Use of a cylinder assembly (305) according to claim 16 for manufacturing an implement (10) for soil tillage.

18. A process for manufacturing an implement (10) for soil tillage using a cylinder assembly (305) according to claim 16, comprising the steps of
a) providing a frame of the implement (10) for soil tillage,
b) providing the cylinder assembly (305), and
c) attaching the cylinder assembly (305) of step b) to the frame of step a) in a detachable manner.

19. A framing for an implement (10) for soil tillage comprising
▪ a supporting structure (20) comprising at least one structural member (202), and
▪ a supporting frame (40)
- extending from a distal structural member (202) of the supporting structure (20),
- being detachably connected to the supporting structure (20) by at least one connecting element (401), and
- comprising
i. at least two support arms (50) being detachably connected to the distal structural member (202) of the supporting structure (20), and
ii. at least one structural part (60)
- being detachably connected to at least two of the support arms (50) by at least one fastener (601) and
- being situated beneath a lower surface (501) of the at least two support arms (50).

20. A process for manufacturing an implement (10) for soil tillage comprising the steps of
a) providing a supporting structure (20) comprising at least one structural member (202), wherein at least one first assembly (30) applicable to soil tillage can be detachably affixed to one or more of the structural members (201, 202) each by at least one first linking element (301),
b) providing a supporting frame (40) comprising
i. at least two support arms (50) being detachably connected to a distal structural member (202) of the supporting structure (20), and
ii. at least one structural part (60)
- being detachably connected to least two of the support arms (50) by at least one fastener (601), the at least one structural part (60) being situated beneath a lower surface (501) of the at least two support arms (50), and
- to which at least one second assembly (70) applicable to soil tillage can be detachably affixed by at least one second linking element (701),
c) connecting the supporting frame (40) to the supporting structure (20) by at least one connecting element (401) in a detachable manner, the supporting frame (40) extending from the distal structural member (202) of the supporting structure (20),
d) affixing
- at least one first assembly (30) to one or more of the structural members (201, 202) of the supporting structure (20) each and/or
- at least one second assembly (70) to one or more of the structural parts (60) of the supporting frame (40) each.

21. The process according to claim 20,
wherein the supporting structure (20) comprises at least the distal structural member (202) and a first structural member (201), which are
- arranged in tandem at a predefinable distance (D1) from each other, with a first longitudinal axis (A_{L1}) of the first structural member (201) and a second longitudinal axis (A_{L2}) of the distal structural member (202) being parallel to one another, and
- detachably linked by at least one joining element (203);
and/or
wherein the at least one first assembly (30) and the at least one second assembly (70) are independently from each other selected from the group consisting of cutter assemblies (304), cylinder assemblies (305), coulter assemblies (306a, 306b), harrow assemblies (704) and roller assemblies (707);
and/or
wherein the at least one first assembly (30) is selected from the group consisting of
i. cutter assemblies (304),
ii. cylinder assemblies (305) and
iii. coulter assemblies (306a, 306b), and
the at least one second assembly (70) is selected from the group consisting of
i. harrow assemblies (704) comprising at least one disc coulter (704b, 704c),
ii. chisel assemblies (705),
iii. assemblies comprised in a buster (706), and
iv. roller assemblies (707).

22. The process according to any one of claims 20 to 21,
wherein
- a plurality of first assemblies (30) is arranged along a longitudinal axis (A_{L}) of at least one of the structural members (201, 202), at a predefinable distance (D₂) from each other, and/or
- a plurality of second assemblies (70) is arranged along a longitudinal axis (A_{LS}) of at least one of the structural parts (60), at a predefinable distance (D_{S}) from each other, the longitudinal axis (A_{LS}) of at least one of the structural parts (60) being parallel to the longitudinal axis (A_{L1}) and/or to the second longitudinal axis (A_{L2}); and/or
wherein the cylinder assembly (305) comprises
i. a cylinder body (307) defining a common axis (A_{C1}) of a plurality of radial coulter assemblies (306a) being arranged along the common axis (A_{C1}) and comprising a fitting wheel (308) each, each fitting wheel (308) having at least one radially outwards extending ring-shaped coulter (82) on an outer circumferential surface (309), each of the radial coulter assemblies (306a) particularly being positioned immediately behind one of the cutter assemblies (304), and
ii. a plurality of longitudinal coulter assemblies (306b) being arranged along the common axis (A_{C1}) between vicinal radial coulter assemblies (306a), each of the longitudinal coulter assemblies (306b) comprising at least two radially outwards extending longish coulters (81) being arranged along a circumference of the cylinder body (307).
